# EUROPEAN PATENT APPLICATION

(11) **EP 4 513 955 A1**
(43) Date of publication of application: **26.02.2025**
(21) Application number: 23818896.5
(22) Date of filing: 15.05.2023
(51) Int. Cl.: H04W 28/06

(54) **PRECODING CONFIGURATION METHOD AND DEVICE, AND STORAGE MEDIUM**

(30) Priority: 10.06.2022 CN 202210655284
(71) Applicant: ZTE Corporation, Shenzhen, Guangdong 518057 (CN)
(72) Inventor: YANG, Jun, Shenzhen, Guangdong 518057 (CN); CHEN, Yijian, Shenzhen, Guangdong 518057 (CN); DOU, Jianwu, Shenzhen, Guangdong 518057 (CN); WANG, Yuxin, Shenzhen, Guangdong 518057 (CN); LI, Yong, Shenzhen, Guangdong 518057 (CN)
(74) Representative: Savi, Massimiliano
(86) International application number: PCT/CN2023/094336
(87) International publication number: WO 2023/236731

(57) **Abstract**

The present application provides a precoding configuration method and device, and a storage medium. The method comprises: grouping a plurality of communication nodes waiting for precoding configuration to obtain a plurality of node groups; generating corresponding precoding configuration signaling for each node group, wherein the precoding configuration signaling corresponding to each node group comprises precoding configuration information corresponding to each communication node in the node group; and sending the corresponding precoding configuration signaling to each node group, so that each communication node in the node group acquires the corresponding precoding configuration information in the corresponding precoding configuration signaling for configuration.

## Description

### CROSS-REFERENCE TO RELATED APPLICATION

This application is filed on the basis of Chinese patent application No. 202210655284.2 filed June 10, 2022, and claims priority to the Chinese patent application, the entire contents of which are incorporated herein by reference.

### TECHNICAL FIELD

Embodiments of the present disclosure relate to, but not limited to, the technical field of communication, and more particularly, to a precoding configuration method and apparatus, and a storage medium.

### BACKGROUND

In conventional antenna communication standards, a transmitter (such as a communication base station) needs to deliver precoding configuration signaling to each accessing communication node (such as terminal devices) individually. During this process, each communication node requires a specific downlink channel resource, which not only reduces precoding configuration efficiency, but also increases resource overheads. Additionally, since the precoding configuration signaling delivered to each communication node needs to carry the same packet header, the precoding configuration signaling contains a significant amount of redundant information, further increasing signaling overhead. Therefore, how to realize precoding configuration of communication nodes while reducing signaling overheads and improving configuration efficiency is an urgent problem to be addressed.

### SUMMARY

Embodiments of the present disclosure provide a precoding configuration method and apparatus, and a storage medium, to realize precoding configuration of communication nodes while reducing signaling overheads and improving configuration efficiency.

In accordance with a first aspect of the present disclosure, an embodiment provides a precoding configuration method, including:
grouping a plurality of communication nodes for which precoding configuration is to be performed, to obtain a plurality of node groups; generating corresponding precoding configuration signaling for each of the node groups, where the precoding configuration signaling corresponding to each respective node group includes precoding configuration information corresponding to each communication node in the respective node group; and sending the corresponding precoding configuration signaling to the respective node group, such that each communication node in the respective node group acquires the corresponding precoding configuration information in the corresponding precoding configuration signaling for configuration.

In accordance with a second aspect of the present disclosure, an embodiment provides a precoding configuration apparatus, including: a memory, a processor, and a computer program stored in the memory and executable by the processor, where the computer program, when executed by the processor, causes the processor to carry out the precoding configuration method.

In accordance with a third aspect of the present disclosure, an embodiment provides a computer-readable storage medium, storing computer-executable instructions which, when executed by a processor, cause the processor to carry out the precoding configuration method.

In accordance with a fourth aspect of the present disclosure, an embodiment provides a computer program product, including a computer program or a computer instruction stored in a computer-readable storage medium, where the computer program or the computer instruction, when read from the computer-readable storage medium and executed by a processor of a computer device, causes the computer device to carry out the precoding configuration method.

The embodiments of the present disclosure include: first, grouping a plurality of communication nodes for which precoding configuration is to be performed, to obtain a plurality of node groups; then generating corresponding precoding configuration signaling for each of the node groups, where the precoding configuration signaling corresponding to each respective node group includes precoding configuration information corresponding to each communication node in the respective node group; and finally sending the corresponding precoding configuration signaling to the respective node group, such that each communication node in the respective node group acquires the corresponding precoding configuration information in the corresponding precoding configuration signaling for configuration. In other words, each precoding configuration signaling may be sent to a plurality of communication nodes in a node group, and there is no need to send one precoding configuration signaling for each communication node. As such, not only precoding configuration efficiency is improved, but also signaling overheads are reduced. In addition, each precoding configuration signaling further includes precoding configuration information corresponding to each communication node in the respective node group, such that each communication node in the respective node group can acquire the corresponding precoding configuration information in the corresponding precoding configuration signaling for configuration. Therefore, the embodiments of the present disclosure can realize precoding configuration of communication nodes while reducing signaling overheads and improving configuration efficiency.

### BRIEF DESCRIPTION OF DRAWINGS

FIG. 1 is a flowchart of a precoding configuration method according to an embodiment of the present disclosure.
FIG. 2 is a schematic diagram of node groups according to an example of the present disclosure;
FIG. 3 is a schematic diagram of node groups according to another example of the present disclosure;
FIG. 4 is a schematic diagram of node groups according to another example of the present disclosure;
FIG. 5 is a schematic diagram of node groups according to another example of the present disclosure;
FIG. 6 is a schematic diagram of node groups according to another example of the present disclosure;
FIG. 7 is a schematic diagram of node groups according to another example of the present disclosure;
FIG. 8 is a schematic diagram of node groups according to another example of the present disclosure;
FIG. 9 is a flowchart of an implementation of S120 in FIG. 1;
FIG. 10 is a flowchart of an implementation of S230 in FIG. 9;
FIG. 11 is a flowchart of an implementation of S330 in FIG. 10;
FIG. 12 is a flowchart of another implementation of S230 in FIG. 9;
FIG. 13 is a flowchart of another implementation of S120 in FIG. 1;
FIG. 14 is a flowchart of an implementation of S630 in FIG. 13;
FIG. 15 is a flowchart of another implementation of S630 in FIG. 13;
FIG. 16 is a flowchart of another implementation of S120 in FIG. 1;
FIG. 17 is a flowchart of an implementation of S950 in FIG. 16;
FIG. 18 is a flowchart of an implementation of S1020 in FIG. 17;
FIG. 19 is a flowchart of another implementation of S950 in FIG. 16;
FIG. 20 is a flowchart of another implementation of S950 in FIG. 16;
FIG. 21 is a flowchart of another implementation of S950 in FIG. 16;
FIG. 22 is a flowchart of an implementation of S130 in FIG. 1;
FIG. 23 is a flowchart of another implementation of S130 in FIG. 1;
FIG. 24 is a flowchart of another implementation of S130 in FIG. 1;
FIG. 25 is a schematic diagram of determining precoding configuration information according to an example of the present disclosure; and
FIG. 26 is a schematic structural diagram of a precoding configuration apparatus according to an embodiment of the present disclosure.

### DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It should be noted that although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. In the description, claims, and the accompanying drawings, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first", "second", and the like are merely used for distinguishing technical features, and are not intended to indicate or imply relative importance, or implicitly point out the number of the indicated technical features, or implicitly point out the order of the indicated technical features.

The present disclosure provides a precoding configuration method and apparatus, and a storage medium. The method includes: first, grouping a plurality of communication nodes for which precoding configuration is to be performed, to obtain a plurality of node groups; then generating corresponding precoding configuration signaling for each of the node groups, where the precoding configuration signaling corresponding to each respective node group includes precoding configuration information corresponding to each communication node in the respective node group; and finally sending the corresponding precoding configuration signaling to the respective node group, such that each communication node in the respective node group acquires the corresponding precoding configuration information in the corresponding precoding configuration signaling for configuration. In other words, each precoding configuration signaling may be sent to a plurality of communication nodes in a node group, and there is no need to send one precoding configuration signaling for each communication node. As such, not only precoding configuration efficiency is improved, but also signaling overheads are reduced. In addition, each precoding configuration signaling further includes precoding configuration information corresponding to each communication node in the respective node group, such that each communication node in the respective node group can acquire the corresponding precoding configuration information in the corresponding precoding configuration signaling for configuration. Therefore, the embodiments of the present disclosure can realize precoding configuration of communication nodes while reducing signaling overheads and improving configuration efficiency.

It should be noted that in related technologies, because array antennas can dynamically modulate beams to achieve efficient utilization of spatial resources, Multiple Input Multiple Output (MIMO) and Massive MIMO technologies have been widely used in 4th Generation (4G) and 5th Generation (5G) networks. In addition, the beam modulation can be realized by a precoding technology, i.e., by changing the output phase of each oscillator on the array, transmitted signals are superimposed in phase in a specified direction to obtain better directivity gain. When the location of the communication node changes, the beam direction can be adjusted by adjusting precoding configuration information of the array, thus realizing the tracking of the communication node. In existing standards, it is usually necessary to design one or more sets of precoding configuration information (such as precoding weights, i.e., codebooks) in advance, and then select the optimal precoding configuration information from the pre-designed codebooks according to pilot information for configuration. The pre-designed codebook is composed of a plurality of pieces of precoding configuration information each corresponding to a different beam direction. In conventional wireless communication standards, a transmitter (such as a communication base station) needs to deliver precoding configuration signaling to accessing communication nodes (such as terminal devices) one by one. In the process of delivering precoding configuration signaling, each communication node needs to occupy a specific downlink channel resource, which not only reduces precoding configuration efficiency, but also increases resource overheads. In addition, because the precoding configuration signaling delivered to each communication node needs to carry the same packet header, the precoding configuration signaling includes much redundant information, which increases the signaling overheads. Moreover, because there is a strong channel correlation between communication nodes with distribution rules, and there is also a correlation between precoding configuration information corresponding to such communication nodes, there will be redundant information between precoding configuration signaling. In view of the above problems, it is necessary to optimize existing precoding configuration methods to improve precoding configuration efficiency and reduce signaling overheads.

Similarly, a Reconfigurable Intelligent Surface (RIS) is a reflective or transmissive array of a large number of reconfigurable electromagnetic units of sub-wavelength size, which can change properties of an electromagnetic signal incident on its surface. In addition, a spatial electromagnetic signal can be dynamically adjusted, for example, the propagation direction of the incident electromagnetic signal can be changed, by changing the state of each electromagnetic unit on the array. Therefore, to achieve dynamic adjustment, it is necessary to design a corresponding RIS according to the incident signal, reflection direction, and transmission direction. Moreover, deploying a large number of low-cost RISs in the environment can expand the coverage of wireless signals without increasing the number of communication base stations, reduce network construction costs, and improve the energy efficiency of wireless communication systems. Therefore, RISs are expected to become one of key technologies of future 6G networks. However, the RIS is a passive array, which can only passively reflect or transmit electromagnetic signals incident on its surface. In addition, in view of cost considerations, the RIS is usually designed as an array without measurement function or an array with only a few electromagnetic units with measurement function. Therefore, the RIS cannot implement channel measurement alone, but has to cooperate with a communication base station to implement channel measurement and precoding configuration. When a large number of RISs are deployed in a wireless communication cell, a communication base station needs to use a large amount of precoding configuration signaling to deliver precoding configuration information to each RIS, leading to low precoding configuration efficiency and high signaling overheads.

In addition, some novel wireless relay nodes are also provided with a beam modulation capability, and therefore also requires precoding configuration. Moreover, because the costs of wireless relay nodes are lower than those of communication base stations, the demand for wireless relay nodes will be much greater than the demand for communication base stations. Therefore, when such wireless relay nodes also need to cooperate with the communication base station in order to implement precoding configuration, the configuration scheme also needs to be optimized to improve the precoding configuration efficiency.

Based on the above analysis, the embodiments of the present disclosure will be further described in detail below in conjunction with the accompanying drawings.

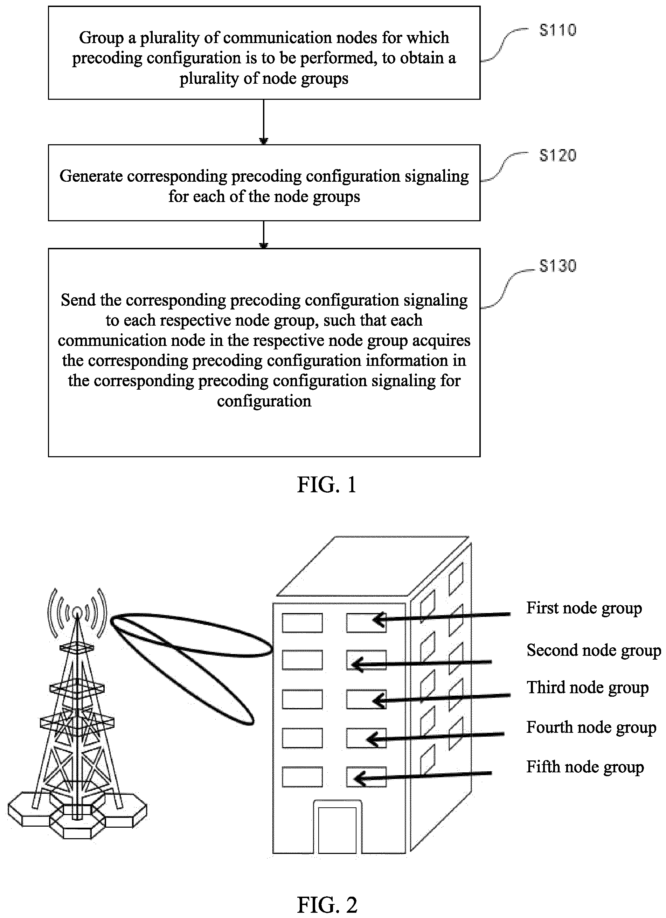

FIG. 1 is a flowchart of a precoding configuration method according to an embodiment of the present disclosure. The precoding configuration method may include, but not limited to, the following steps S110, S120, and S130.

At S110, a plurality of communication nodes for which precoding configuration is to be performed are grouped to obtain a plurality of node groups.

In a feasible implementation, assuming that the number of communication nodes for which precoding configuration is to be performed is N, the N communication nodes are grouped to obtain K node groups, where K represents the number of node groups, K≥1, N≥1, and N>K, which is not particularly limited herein.

In a feasible implementation, the communication node may be a communication base station, a mobile terminal, an Internet of Things (IoT) device, an RIS, a wireless relay node, etc., which will not be enumerated herein.

In a feasible implementation, the grouping of the plurality of communication nodes may be implemented in different manners, which may include, but not limited to, at least one of: grouping the plurality of communication nodes according to a channel correlation between the communication nodes; grouping the plurality of communication nodes according to location information; grouping the plurality of communication nodes according to users served by or coverage areas of the communication nodes; or grouping the plurality of communication nodes according to types of the communication nodes. The channel correlation is a correlation between uplink channels or downlink channels occupied by different communication nodes.

It can be understood that when the channel correlation between different communication nodes is greater than a channel correlation threshold, there is a strong correlation between precoding configuration information of the communication nodes. Therefore, the plurality of communication nodes can be grouped according to the channel correlation. The channel correlation threshold may be set according to an actual situation.

It can be understood that communication nodes serving the same user or having the same coverage area can coordinate and cooperate with each other when performing beam adjustment. Therefore, to avoid affecting user experience during beam switching, communication nodes serving the same user or having the same coverage area need to perform beam adjustment synchronously. There is a strong channel correlation between communication nodes serving the same user or having the same coverage area, and there is also a strong correlation between precoding configuration information of the communication nodes. Therefore, the plurality of communication nodes may be grouped according to users served or coverage areas.

It can be understood that the plurality of communication nodes may include different types of communication nodes, and communication nodes of the same communication node type have similar precoding configuration information. Therefore, the plurality of communication nodes may be grouped according to the communication node types.

In a feasible implementation, when a node group obtained by grouping the plurality of communication nodes according to the communication node types includes a large number of communication nodes, the communication nodes in the node group may be further grouped according to the channel correlation, location information, users served, or coverage areas, which is not particularly limited herein.

In an embodiment, grouping of the plurality of communication nodes according to the channel correlation is taken as an example. When the channel correlation threshold is a specific value, and it is assumed that the total number of communication nodes for which precoding configuration is to be performed is M, the M communication nodes are grouped according to the channel correlation. When a channel correlation between N communication nodes is greater than the channel correlation threshold, the N communication nodes are grouped into one node group, and the other (M-N) communication nodes are grouped into another node group. N represents the number of communication nodes whose channel correlation is greater than the channel correlation threshold, M≥N, M≥1, and N≥1. Alternatively, when the channel correlation threshold is a range and the total number of communication nodes for which precoding configuration is to be performed is M, the M communication nodes are grouped according to the channel correlation. N communication nodes whose channel correlation is greater than the channel correlation threshold may be grouped into one node group, W communication nodes whose channel correlation is within the channel correlation threshold may be grouped into another node group, and (M-W-N) communication nodes whose channel correlation is less than the channel correlation threshold may be grouped into another node group. M≥N, M≥W, M≥1, N≥1, and W≥1. The channel correlation threshold may be set according to an actual situation, which is not particularly limited in the embodiments of the present disclosure.

In an embodiment, grouping of the plurality of communication nodes according to the channel correlation is taken as an example. It is assumed that the communication nodes are mobile terminals in a cell, and the plurality of mobile terminals are grouped according to the channel correlation, i.e., the plurality of mobile terminals are grouped according to a correlation between uplink channels or downlink channels occupied by the plurality of mobile terminals. Because uplink and downlink channels of mobile terminals located on the same floor in the same building in a cell have a strong correlation in the vertical direction, the mobile terminals on the same floor may be grouped into one node group. As shown in FIG. 2, a building has 5 floors, and may be divided into 5 node groups, which is not particularly limited herein.

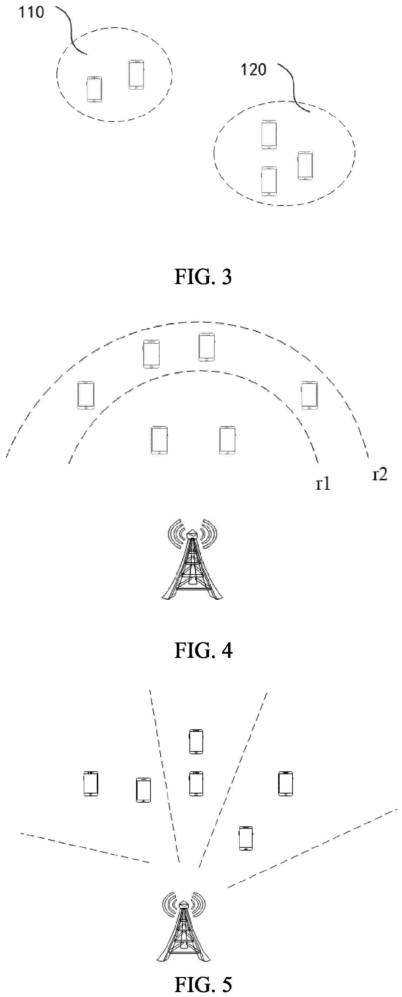

In an embodiment, grouping of the plurality of communication nodes according to the location information is taken as an example. It is assumed that the transmitter is a communication base station, the communication nodes are mobile terminals in a cell, and the plurality of mobile terminals all establish a connection with the communication base station, i.e., the plurality of mobile terminals are communication nodes for which precoding configuration is to be performed. When the location information is location distances between the plurality of communication nodes, the mobile terminals corresponding to a location distance less than a distance threshold may be grouped into one node group. As shown in FIG. 3, location distances between three mobile terminals are less than the distance threshold, so the three mobile terminals may be grouped into a first node group 120; and a location distance between another two communication nodes is less than the distance threshold, so the two communication nodes may be grouped into a second node group 110. The distance threshold may be set according to an actual situation. When the location information is location distances of the plurality of communication nodes relative to a reference location, and the location distance includes a length distance, the mobile terminals which are located away from the base station by a length distance falling within a distance range may be grouped into one node group. The distance range may be set according to an actual situation. As shown in FIG. 4, two communication nodes which are located away from the base station by a length distance falling within a distance range of 0 meters to r1 meters are grouped into a first node group, and four communication nodes which are located away from the base station by a length distance falling within a distance range of r1 meters to r2 meters are grouped into a second node group. When the location information is location distances of the plurality of communication nodes relative to a reference location, and the location distance includes an angular distance, the mobile terminals which are located away from the base station by an angular distance falling within an angle range may be grouped into one node group. The angle range may be set according to an actual situation. As shown in FIG. 5, according to angular distances of six communication nodes for which precoding is to be performed relative to the location of the base station, the six communication nodes are grouped to obtain three node groups. Each node group includes two communication nodes, which is not particularly limited in the embodiments of the present disclosure.

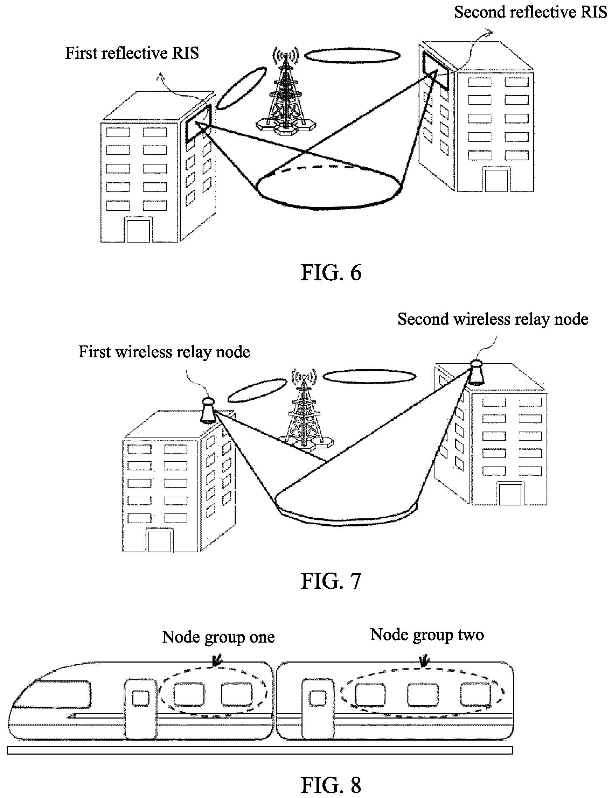

In an embodiment, grouping of the plurality of communication nodes according to users served or coverage areas is taken as an example. As shown in FIG. 6, it is assumed that the transmitter is a communication base station, and the communication nodes are a first reflective RIS deployed outside a first building and a second reflective RIS deployed outside a second building. The first reflective RIS and the second reflective RIS are both configured for reflecting a base station signal of the communication base station to a street, to realize signal enhancement or increase system capacity. Therefore, the first reflective RIS and the second reflective RIS have the same coverage area. In this case, the first reflective RIS and the second reflective RIS may be grouped into one node group. As shown in FIG. 7, it is assumed that the transmitter is a communication base station, and the communication nodes are a first wireless relay node distributed in a first building and a second wireless relay node distributed in a second building. The first wireless relay node and the second wireless relay node are configured for relaying a base station signal of the communication base station to the same coverage area. Therefore, the first wireless relay node and the second wireless relay node may be grouped into one node group. As shown in FIG. 8, it is assumed that the transmitter is a communication base station, and the communication nodes are transmissive RISs integrated on windows of a high-speed railway, which can transmit a signal from the base station outside the windows of the high-speed railway into carriages. The RISs on the same carriage is only configured for transmitting the signal of the base station outside the windows of the high-speed railway into the carriage, to realize signal enhancement for mobile terminals in the carriage in a high-speed movement scenario. Therefore, the RISs on the same carriage may be grouped into one node group, i.e., the RISs on the two carriages may be grouped into two node groups. There are two RISs (i.e., two communication nodes) in carriage one (node group one) and three RISs (i.e., three communication nodes) in carriage two (node group two). In addition, the grouping the plurality of communication nodes according to users served by or coverage areas of the communication nodes is also applicable to other communication nodes having a communication service function, which is not particularly limited in the embodiments of the present disclosure.

In a feasible implementation, when the plurality of communication nodes are grouped according to the location information, the location information may be location distances between the plurality of communication nodes, or may be location distances of the plurality of communication nodes from a reference location. The location information may include at least one of a length distance or an angular distance, which is not particularly limited herein. It can be understood that when the location distance is less than a distance threshold, uplink channels or downlink channels corresponding to the communication nodes are similar, so there is a strong channel correlation between the communication nodes, and there is also a strong correlation between precoding configuration information of the communication nodes. The distance threshold may be set according to an actual situation. Therefore, the plurality of communication nodes may be grouped according to the location information.

In a feasible implementation, the plurality of communication nodes may be grouped when detecting a change in locations of the communication nodes, a number of communication nodes, or a wireless channel environment or receiving a regrouping instruction, which is not particularly limited herein.

At S120, corresponding precoding configuration signaling is generated for each of the node groups.

In an optional implementation, the precoding configuration signaling corresponding to each respective node group may include precoding configuration information corresponding to each communication node in the respective node group.

At S130, the corresponding precoding configuration signaling is sent to the respective node group, such that each communication node in the respective node group acquires the corresponding precoding configuration information in the corresponding precoding configuration signaling for configuration.

In a feasible implementation, the corresponding precoding configuration signaling may be sent to each respective node group in a multicast manner, which is not particularly limited herein.

In an optional implementation, the precoding configuration information may include any one of precoding configuration information for emitting a wireless signal, precoding configuration information for receiving a wireless signal, precoding configuration information for relaying a wireless signal, precoding configuration information for reflecting a wireless signal, or precoding configuration information for transmitting a wireless signal, which is not particularly limited herein. The precoding configuration information for emitting a wireless signal may be used to configure a transmit precoding weight of service data, a pilot signal, or a synchronization signal to adjust a transmit beam direction of the service data, the pilot signal, or the synchronization signal. The precoding configuration information for receiving a wireless signal may be used to configure a receive precoding weight of the service data, the pilot signal, or the synchronization signal to adjust the strongest reception direction of the service data, the pilot signal, or the synchronization signal. The precoding configuration information for reflecting or transmitting a wireless signal is generally used for precoding configuration of an RIS to realize the reflection or transmission of the wireless signal in the propagation direction. Because the RIS generally adopts a passive array and does not sense the service type, precoding configuration of the RIS does not require distinguishing the service type. The function of the precoding configuration information for relaying a wireless signal is similar to the function of the precoding configuration information for transmitting a wireless signal and the function of the precoding configuration information for reflecting a wireless signal, so the details will not be repeated herein.

In an embodiment, it is assumed that the number of node groups is K, and corresponding precoding configuration signaling is generated for each node group. In this case, a total of K precoding configuration signalings are generated. An i^{th} precoding configuration signaling is sent to all communication nodes in an i^{th} node group in a multicast manner, where i = 1, 2, ..., K. The number of communication nodes in each node group is at least two, which is not particularly limited herein.

In this embodiment, with the precoding configuration method including the above steps S110 to S130, first, a plurality of communication nodes for which precoding configuration is to be performed are grouped, to obtain a plurality of node groups; then corresponding precoding configuration signaling is generated for each of the node groups, where the precoding configuration signaling corresponding to each respective node group includes precoding configuration information corresponding to each communication node in the respective node group; and finally the corresponding precoding configuration signaling is sent to the respective node group, such that each communication node in the respective node group acquires the corresponding precoding configuration information in the corresponding precoding configuration signaling for configuration. In other words, each precoding configuration signaling may be sent to a plurality of communication nodes in a node group, and there is no need to send one precoding configuration signaling for each communication node. As such, not only precoding configuration efficiency is improved, but also signaling overheads are reduced. In addition, each precoding configuration signaling further includes precoding configuration information corresponding to each communication node in each respective node group, such that each communication node in each node group can acquire the corresponding precoding configuration information in the corresponding precoding configuration signaling for configuration. Therefore, the embodiments of the present disclosure can realize precoding configuration of communication nodes while reducing signaling overheads and improving configuration efficiency.

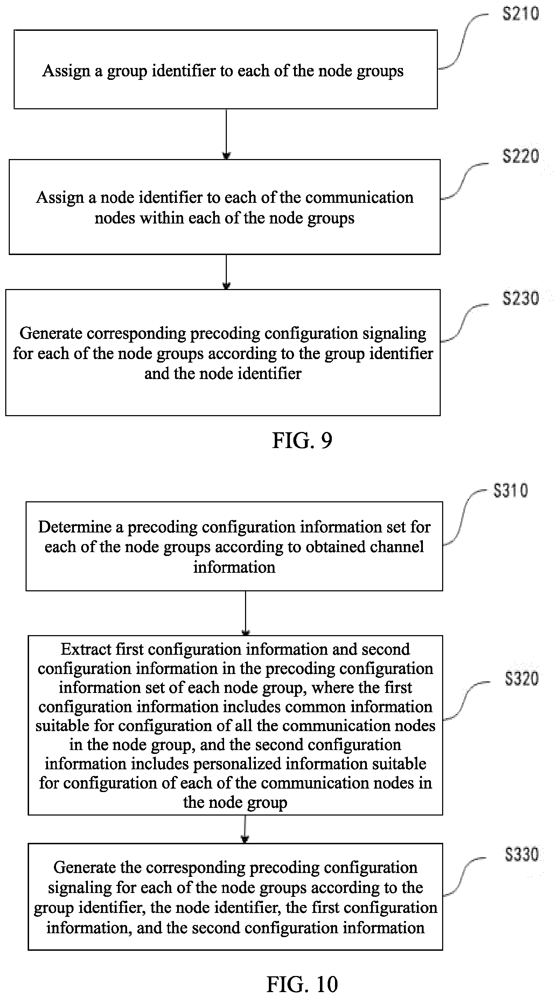

In an embodiment, as shown in FIG. 9, S120 is further described. S120 may include, but not limited to, the following steps S210, S220, and S230.

At S210, a group identifier is assigned to each of the node groups.

At S220, a node identifier is assigned to each of the communication nodes within each of the node groups.

At S230, corresponding precoding configuration signaling is generated for each of the node groups according to the group identifier and the node identifier.

In this embodiment, with the precoding configuration method including the above steps S210 to S230, first, a group identifier may be assigned to each of the node groups; then, a node identifier is assigned to each of the communication nodes within each of the node groups; and finally corresponding precoding configuration signaling is generated for each of the node groups according to the group identifier and the node identifier. In this way, each communication node in each node group can determine corresponding precoding configuration signaling according to the group identifier, and then acquire corresponding precoding configuration information from the precoding configuration signaling according to the node identifier.

In an embodiment, before S230, S120 may further include, but not limited to, a following operation:
broadcasting the group identifier and the node identifier to the corresponding communication node through first signaling.

In this embodiment, first, a group identifier is assigned to each of the node groups, and a node identifier is assigned to each of the communication nodes within each of the node groups; then, the group identifier and the node identifier are broadcasted to the corresponding communication node through first signaling; and finally, corresponding precoding configuration signaling can be generated for each of the node groups according to the group identifier and the node identifier. In other words, each communication node in each node group may learn its group identifier and node identifier before receiving the corresponding precoding configuration signaling. In this way, each communication node in each node group can determine corresponding precoding configuration signaling according to the known group identifier, and then acquire corresponding precoding configuration information from the precoding configuration signaling according to the known node identifier. This is not particularly limited in the embodiments of the present disclosure.

In an embodiment, as shown in FIG. 10, S230 is further described. S230 may include, but not limited to, the following steps S310, S320, and S330.

At S310, a precoding configuration information set is determined for each of the node groups according to obtained channel information.

At S320, first configuration information and second configuration information in the precoding configuration information set of each node group are extracted, where the first configuration information includes common information suitable for configuration of all the communication nodes in the node group, and the second configuration information includes personalized information suitable for configuration of each of the communication nodes in the node group.

For example, as shown in FIG. 2, mobile terminals located on different floors in the building have different horizontal angles and the same pitch angle relative to the communication base station. The pitch angle is common information, and the horizontal angle is personalized information. For another example, as shown in FIG. 4, the length distances between the mobile terminals in the same node group and the communication base station fall within the same distance range, but the angular distances of the mobile terminals corresponding to the same distance range relative to the location of the communication base station are inconsistent. Therefore, the length distance is common information, and the angular distance is personalized information. Similarly, as shown in FIG. 5, the angular distances of the mobile terminals in the same node group relative to the location of the communication base station fall within the same angle range, but the length distances between the mobile terminal in the same node group and the communication base station are different. Therefore, the angular distance may be common information, and the length distance may be personalized information. For another example, as shown in FIG. 8, different RISs on the same carriage (e.g., the two RISs in carriage one or the three RISs in carriage two) have different horizontal angles but the same pitch angle relative to the communication base station. Therefore, the pitch angle is common information, and the horizontal angle is personalized information. This is not particularly limited herein.

At S330, the corresponding precoding configuration signaling is generated for each of the node groups according to the group identifier, the node identifier, the first configuration information, and the second configuration information.

In this embodiment, with the precoding configuration method including the above steps S310 to S330, first, a precoding configuration information set is determined for each of the node groups according to obtained channel information; then, first configuration information and second configuration information in the precoding configuration information set of each node group are extracted, where the first configuration information includes common information suitable for configuration of all the communication nodes in the node group, and the second configuration information includes personalized information suitable for configuration of each of the communication nodes in the node group; and finally, the corresponding precoding configuration signaling is generated for each of the node groups according to the group identifier, the node identifier, the first configuration information, and the second configuration information. In other words, common information suitable for the configuration of each communication node in each group can be screened out, and signaling overheads can be reduced by removing redundant information. In addition, after the precoding configuration signaling is sent to each node group, each communication node in each node group can determine the corresponding precoding configuration signaling according to the group identifier, acquire the common information from the first configuration information in the precoding configuration signaling, acquire the personalized information suitable for its own configuration from the second configuration information in the precoding configuration signaling according to the node identifier, and generate its own precoding configuration information according to the common information and the personalized information.

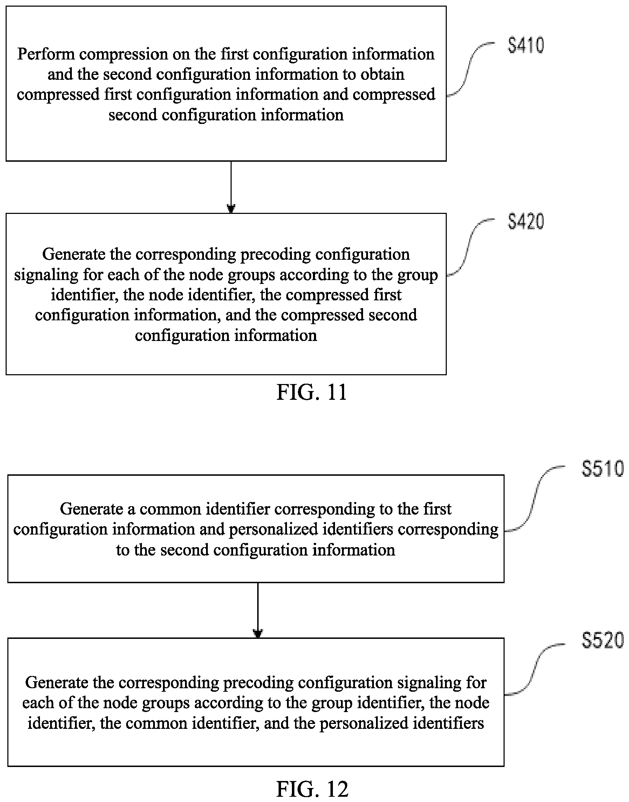

In an embodiment, as shown in FIG. 11, S330 is further described. S330 may include, but not limited to, the following steps S410 and S420.

At S410, compression is performed on the first configuration information and the second configuration information to obtain compressed first configuration information and compressed second configuration information.

At S420, the corresponding precoding configuration signaling is generated for each of the node groups according to the group identifier, the node identifier, the compressed first configuration information, and the compressed second configuration information.

In this embodiment, with the precoding configuration method including the above steps S410 and S420, first, compression is performed on the first configuration information and the second configuration information to obtain compressed first configuration information and compressed second configuration information; and then, the corresponding precoding configuration signaling is generated for each of the node groups according to the group identifier, the node identifier, the compressed first configuration information, and the compressed second configuration information. Therefore, in the embodiment of the present disclosure, redundant information in the first configuration information and the second configuration information can be removed by performing compression on the first configuration information and the second configuration information, thereby reducing signaling overheads.

In an embodiment, refer to Table 1. Table 1 shows a signaling format of the precoding configuration signaling.

**Table 1**

| | | | | | | | | |
|---|---|---|---|---|---|---|---|---|
| GID | CommonData | UID 1 | PM 1 | UID 2 | PM 2 | ... | UID N | PM N |

The signaling format includes at least the following information:
(1) GID;
(2) CommonData;
(3) UID set, including UID 1, UID 2, ..., UID N;
(4) PM set, including PM 1, PM 2, ..., PM N.

GID represents a group identifier, which is used to indicate that the precoding configuration information is only applicable to the communication node having the GID. UID represents a node identifier. UID 1, UID 2, ..., UID N respectively represent node identifiers corresponding to different communication nodes. CommonData represents common information. PM 1, PM 2, ..., PM N respectively include personalized information applicable to the configuration of the corresponding communication nodes. Each UID corresponds to one PM (for example, UID 1 corresponds to PM 1). Each PM is an array or a matrix. Each PM includes compressed precoding configuration information obtained by performing compression on the precoding configuration information according to the common information. Each communication node receiving the precoding configuration signaling may restore the compressed precoding configuration information by utilizing an agreed rule according to CommonData and the PM after the UID of CommonData (i.e., the PM corresponding to the UID), and then perform configuration by utilizing the restored precoding configuration information.

Based on the above embodiments, in an embodiment, a node group includes a communication node A and a communication node B, and each of the communication node A and the communication node B includes an array composed of N rows and M columns of oscillators. It is assumed that the communication node A and the communication base station can only communicate through a direct link, the communication node B and the communication base station can only communicate through a direct link, and the direct link between the communication node A and the communication base station and the direct link between the communication node B and the communication base station have the same pitch angle β, the direct link between the communication node A and the communication base station corresponds to a horizontal angle α₁, and the direct link between the communication node B and the communication base station corresponds to a horizontal angle α₂. When the personalized information and the common information in the precoding configuration information set of the node group are not extracted, the PM of the communication node A (i.e., PM A) and the PM of the communication node B (i.e., PM B) are as shown in Table 2, where *η* = *kd* cos *β*, *ξ_{A}* = *kd* sin *β* cos *α*₁ , and *ξ_{B} = kd* sin *β* cos *α*₂ .

**Table 2**

| PM A | | | | PM B | | | |
|---|---|---|---|---|---|---|---|
| 1 | *e^{jξ_{A}}* | ... | *e*^{*j*(*M*-1)*ξ_{A}*} | 1 | *e^{jξ_{B}}* | ... | *e*^{*j*(*M*-1)*ξ_{B}*} |
| *e^{jη}* | *e*^{*j*(*ξ_{A}+η*)} | ... | *e*^{*j*[(*M*-1)*ξ_{A}+η*]} | *e^{jη}* | *e*^{*j*(*ξ_{B}+η*)} | ... | *e*^{*j*[(*M*-1)*ξ_{B}+η*]} |
| ... | ... | ... | ... | ... | ... | ... | ... |
| *e*^{*j*(*N*-1)*η*} | *e*^{*j*[ξ*_{A}+*(*N*-1)*η*]} | ... | *e*^{*j*[(*M*-1)*ξ_{A}+*(*N*-1)*η*]} | *e*^{*j*(*N-1*)*η*} | *e*^{*j*[*ξ_{B}+*(*N*-1)*η*]} | ... | *e*^{*j*[(*M*-1)*ξ_{B}+*(*N*-1)*η*]} |

As can be seen from the above table, both PM A and PM B include data *η*, so the common information is data *η*; and PM A includes data *ξ_{A},* and PM B includes data *ξ_{B},* i.e., the personalized information is the data *ξ_{A}* and the data *ξ_{B}.* Therefore, the data *η* (i.e., common information) can be extracted to perform precoding compression on the data *η*, such that PM A includes only data related to data *ξ_{A}*, and PM B includes only data related to data *ξ_{B}* , as shown in Table 3 below.

**Table 3**

| PM A | | | | PM B | | | |
|---|---|---|---|---|---|---|---|
| 1 | *e^{jξ_{A}}* | ... | *e*^{*j*(*M*-1)*ξ_{A}*} | 1 | *e^{jξ_{B}}* | ... | *e*^{*j*(*M*-1)*_{B}*} |

It can be seen from Table 2 and Table 3 that after precoding compression, the field length of PM A and the field length of PM B are respectively reduced to 1/N of the original lengths. Because fields of PM A and fields of PM B shown in Table 3 still conform to a certain rule, precoding compression may be further performed on PM A and PM B to obtain *ξ_{A}* and *ξ_{B}* respectively. Finally, after the two precoding compressions are respectively performed on PM A and PM B, precoding configuration signaling shown in Table 4 can be obtained.

**Table 4**

| | | | | | |
|---|---|---|---|---|---|
| GID | *η* | UID A | *ξ_{A}* | UID B | *ξ_{B}* |

After acquiring the common information *η* and the personalized information *ξ_{A}* from the received precoding configuration signaling, the communication node A reconstructs precoding configuration information according to its array dimensions N and M, and performs beam adjustment using the reconstructed precoding configuration information. Similarly, a method of obtaining precoding configuration information by the communication node B is similar to that used by the communication node A, so the details will not be repeated herein. In addition, the order of fields in the precoding configuration signaling may be adjusted according to actual needs, and a communication node receiving the precoding configuration signaling may accurately extract correct information according to an agreed order, which is not particularly limited in the embodiments of the present disclosure.

Because the method of constructing the precoding configuration information based on accurate dimension information in the above embodiment requires complex calculation based on channel information, the real-time configuration performance of the communication node is easily affected. Therefore, a feasible implementation is provided below.

In an embodiment, as shown in FIG. 12, when the communication nodes each have target precoding configuration information pre-stored therein, and the target precoding configuration information includes first configuration information and second configuration information, S230 is further described. S230 may include, but not limited to, the following steps S510 and S520.

At S510, a common identifier corresponding to the first configuration information and personalized identifiers corresponding to the second configuration information are generated.

At S520, the corresponding precoding configuration signaling is generated for each of the node groups according to the group identifier, the node identifier, the common identifier, and the personalized identifiers.

In this embodiment, with the precoding configuration method including the above steps S510 and S520, when the communication nodes each have target precoding configuration information pre-stored therein, and the target precoding configuration information includes first configuration information and second configuration information, a common identifier corresponding to the first configuration information and personalized identifiers corresponding to the second configuration information may be generated; and then, the corresponding precoding configuration signaling is generated for each of the node groups according to the group identifier, the node identifier, the common identifier, and the personalized identifiers. In other words, when the communication node has a plurality of pieces of precoding configuration information pre-stored therein, the communication node may directly determine the corresponding target precoding configuration information from the pre-stored plurality of pieces of precoding configuration information according to the packet identifier and the node identifier in the precoding configuration signaling, then acquire the first configuration information in the target precoding configuration information according to the common identifier, acquire the corresponding second configuration information in the target precoding configuration information according to the personalized identifiers, and combine the first configuration information and the second configuration information to obtain corresponding precoding configuration information in a timely manner. Because there is no need to perform complex calculation on the channel information to reconstruct the precoding configuration information, time overheads caused by the complex calculation on the channel information are avoided, and the efficiency of configuration of communication nodes is improved.

In an embodiment, a node group includes a communication node A and a communication node B, and both the communication node A and the communication node B have a pre-designed codebook pre-stored therein. The codebook includes a plurality of pieces of precoding configuration information, and the first configuration information in each piece of precoding configuration information is assigned a corresponding common identifier, and the second configuration information in each piece of precoding configuration information is assigned a corresponding personalized identifier. For the node group, the transmitter may generate corresponding precoding configuration signaling according to the assigned common identifier and the assigned personalized identifier. A format of the precoding configuration signaling is as shown in Table 5. In Table 5, GID represents a group identifier; UID represents a node identifier; PMI C is a common identifier for identifying common information applicable to the configuration of the communication node A and the communication node B; PMI A is a personalized identifier of the communication node A, and is used for identifying personalized information applicable to the configuration of the communication node A; and PMI B is a personalized identifier of the communication node B, and is used for identifying personalized information applicable to the configuration of the communication node B.

**Table 5**

| | | | | | |
|---|---|---|---|---|---|
| GID | PMI C | UID A | PMI A | UID B | PMI B |

The communication node A can determine the corresponding personalized identifier and common identifier according to the received GID, UID, PMI C, and PMI A, select the corresponding precoding configuration information (i.e., target precoding configuration information) from the codebook pre-stored in the communication node A according to the personalized identifier and the common identifier, and then perform configuration by utilizing the precoding configuration information. Similarly, a method of determining the target precoding configuration information by the communication node B is similar to that used by the communication node A, so the details will not be repeated herein.

It should be noted that in the above embodiment, because the corresponding precoding configuration signaling generated for each node group carries node identifiers of communication nodes in the node group, a larger number of communication nodes in the node group indicates higher signaling overheads.

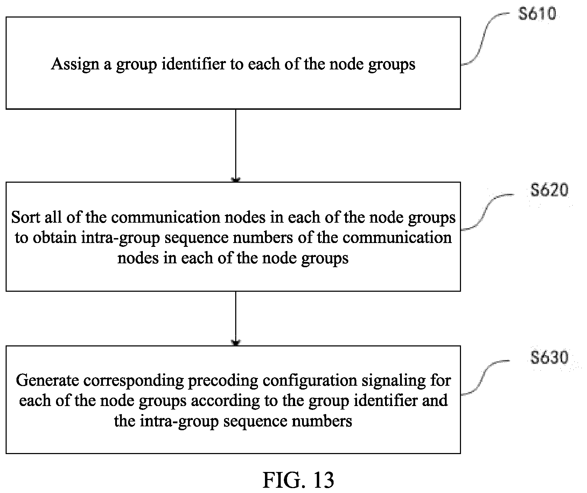

Based on the above, in an embodiment, as shown in FIG. 13, S120 is further described. S120 may include, but not limited to, the following steps S610, S620, and S630.

At S610, a group identifier is assigned to each of the node groups.

At S620, all of the communication nodes in each of the node groups are sorted to obtain intra-group sequence numbers of the communication nodes in each of the node groups.

In a feasible implementation, the sorting of all communication nodes in each node group may be implemented in different manners. For example, all the communication nodes in each node group are sorted randomly. Alternatively, all the communication nodes in each node group are sorted according to a preset reference node and a preset reference indicator. For example, the preset reference node is the communication base station, the preset reference indicator is a distance between the communication node and the communication base station or a horizontal angle of the communication node relative to the communication base station. Alternatively, all the communication nodes in each node group are sorted according to a correlation between the communication nodes in the node group. The correlation between the communication nodes in each node group may be a channel correlation or other correlations, which is not particularly limited herein.

At S630, corresponding precoding configuration signaling is generated for each of the node groups according to the group identifier and the intra-group sequence numbers.

In this embodiment, with the precoding configuration method including the above steps S610 to S630, first, a group identifier may be assigned to each of the node groups; then, all of the communication nodes in each of the node groups are sorted to obtain intra-group sequence numbers of the communication nodes in each of the node groups; and finally, corresponding precoding configuration signaling is generated for each of the node groups according to the group identifier and the intra-group sequence numbers. In this way, signaling overheads caused by carrying the node identifier of each communication node are avoided, thereby reducing signaling overheads.

In an embodiment, before S630, S120 may further include, but not limited to, a following operation:
broadcasting the group identifier and the intra-group sequence number to the corresponding communication node through second signaling.

In this embodiment, first, a group identifier is assigned to each of the node groups; all of the communication nodes in each of the node groups are sorted to obtain intra-group sequence numbers of the communication nodes in each of the node groups; then, the group identifier and the intra-group sequence number may be broadcasted to the corresponding communication node through second signaling; and finally, corresponding precoding configuration signaling can be generated for each of the node groups according to the group identifier and the intra-group sequence numbers. In this way, each communication node can acquire the group identifier and the intra-group sequence number in advance. After the precoding configuration signaling is sent to each node group, each communication node can directly determine corresponding precoding configuration signaling according to the known group identifier, and then determine corresponding precoding configuration information from the precoding configuration signaling according to the intra-group sequence number. This is not particularly limited in the embodiments of the present disclosure.

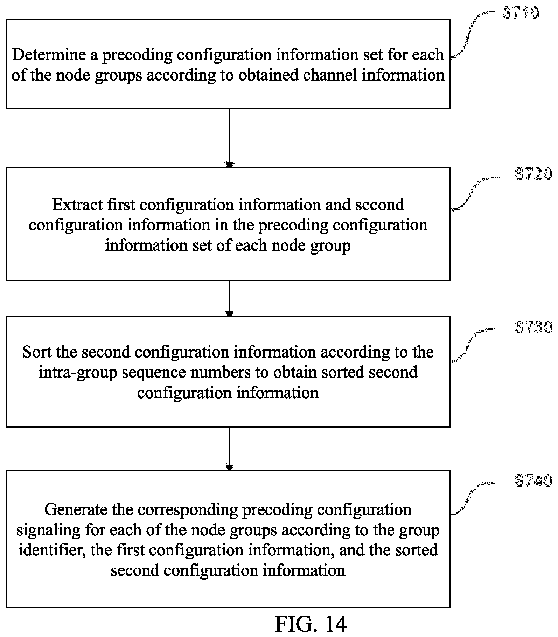

In an embodiment, as shown in FIG. 14, S630 is further described. S630 may include, but not limited to, the following steps S710, S720, S730, and S740.

At S710, a precoding configuration information set is determined for each of the node groups according to obtained channel information.

At S720, first configuration information and second configuration information in the precoding configuration information set of each node group are extracted.

At S730, the second configuration information is sorted according to the intra-group sequence numbers to obtain sorted second configuration information.

At S740, the corresponding precoding configuration signaling is generated for each of the node groups according to the group identifier, the first configuration information, and the sorted second configuration information.

In this embodiment, with the precoding configuration method including the above steps S710 to S740, first, a precoding configuration information set is determined for each of the node groups according to obtained channel information; then, first configuration information and second configuration information in the precoding configuration information set of each node group are extracted; then, the second configuration information is sorted according to the intra-group sequence numbers to obtain sorted second configuration information; and finally, the corresponding precoding configuration signaling is generated for each of the node groups according to the group identifier, the first configuration information, and the sorted second configuration information. In this way, each communication node in each node group extracts the corresponding second configuration information from the sorted second configuration information according to its intra-group sequence number. Because there is no need to use the node identifier to determine the corresponding second configuration information, signaling overheads caused by carrying the node identifier of each communication node are avoided, and signaling overheads are reduced.

In an embodiment, a format of the precoding configuration signaling generated according to the group identifier, the first configuration information, and the sorted second configuration information may be as shown in Table 6. GID represents a group identifier, CommonData represents first configuration information, and PM 1, PM 2, ..., PM N represent the sorted second configuration information.

**Table 6**

| | | | | | |
|---|---|---|---|---|---|
| GID | CommonData | PM 1 | PM 2 | ... | PM N |

In an embodiment, before S730, S630 may further include, but not limited to, a following operation:
performing compression on the first configuration information and the second configuration information to obtain compressed first configuration information and compressed second configuration information.

In this embodiment, a precoding configuration information set may be determined for each of the node groups according to obtained channel information; then, first configuration information and second configuration information in the precoding configuration information set of each node group are extracted; then, compression is performed on the first configuration information and the second configuration information to obtain compressed first configuration information and compressed second configuration information; the compressed second configuration information is sorted according to the intra-group sequence numbers to obtain sorted compressed second configuration information; and finally, the corresponding precoding configuration signaling is generated for each of the node groups according to the group identifier, the compressed first configuration information, and the sorted compressed second configuration information. Therefore, in the embodiment of the present disclosure, redundant information in the first configuration information and the second configuration information can be removed by performing compression on the first configuration information and the second configuration information, thereby reducing signaling overheads of the precoding configuration signaling. In addition, each communication node in each node group extracts the corresponding compressed second configuration information from the sorted compressed second configuration information according to its intra-group sequence number. Because there is no need to use the node identifier to determine the corresponding compressed second configuration information, signaling overheads caused by carrying the node identifier of each communication node are avoided, and signaling overheads are reduced.

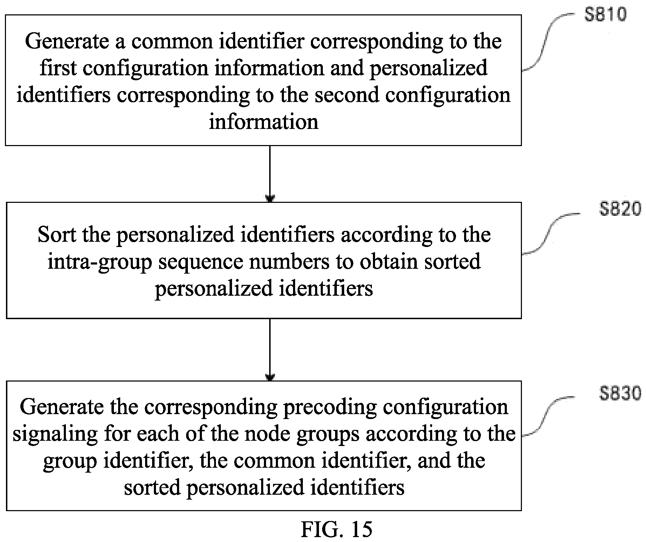

In an embodiment, as shown in FIG. 15, when the communication nodes each have target precoding configuration information pre-stored therein, and the target precoding configuration information includes first configuration information and second configuration information, S630 is further described. S630 may include, but not limited to, the following steps S810, S820, and S830.

At S810, a common identifier corresponding to the first configuration information and personalized identifiers corresponding to the second configuration information are generated.

At S820, the personalized identifiers are sorted according to the intra-group sequence numbers to obtain sorted personalized identifiers.

At S830, the corresponding precoding configuration signaling is generated for each of the node groups according to the group identifier, the common identifier, and the sorted personalized identifiers.

In this embodiment, with the precoding configuration method including the above steps S810 to S830, when the communication nodes each have target precoding configuration information pre-stored therein, and the target precoding configuration information includes first configuration information and second configuration information, first, a common identifier corresponding to the first configuration information and personalized identifiers corresponding to the second configuration information are generated; then, the personalized identifiers are sorted according to the intra-group sequence numbers to obtain sorted personalized identifiers; and finally, the corresponding precoding configuration signaling is generated for each of the node groups according to the group identifier, the common identifier, and the sorted personalized identifiers. In this way, each communication node in each node group acquires corresponding first configuration information from the pre-stored target precoding configuration information according to the common identifier, then determines the corresponding personalized identifier from the sorted personalized identifiers according to its intra-group sequence number, and acquires the corresponding second configuration information from the pre-stored target precoding configuration information according to the personalized identifier. Because there is no need to use the node identifier to determine the corresponding second configuration information, signaling overheads caused by carrying the node identifier of each communication node are avoided, and signaling overheads are reduced.

In an embodiment, assuming that a node group includes a communication node A and a communication node B, and an intra-group sequence number of the communication node A is 1, and an intra-group sequence number of the communication node B is 2, a format of precoding configuration signaling generated according to the group identifier, the common identifier, and the sorted personalized identifiers may be as shown in Table 7. GID represents a group identifier, PIM C represents a common identifier, PMI A represents a personalized identifier of the communication node A, and PIM B represents a personalized identifier of the communication node B.

**Table 7**

| | | | |
|---|---|---|---|
| GID | PMI C | PMI A | PMI B |

It should be noted that because the first configuration information and the second configuration information of the precoding configuration information in the precoding configuration signaling in the above embodiment are both obtained through calculation based on the channel information, a larger number of communication nodes in the node group indicates a larger amount of calculation performed based on the channel information, affecting the real-time performance of beam modulation. Therefore, a feasible implementation is provided below.

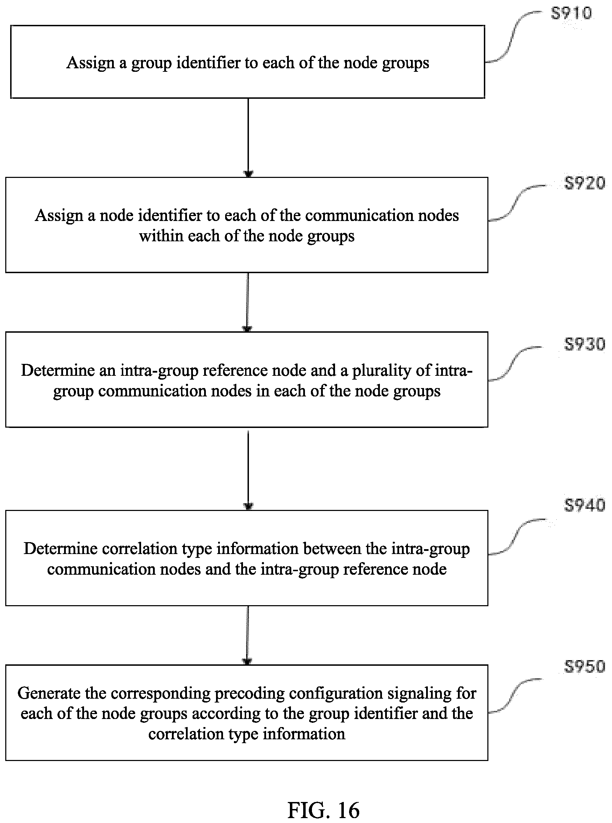

In an embodiment, as shown in FIG. 16, S120 is further described. S120 may include, but not limited to, the following steps S910, S920, S930, S940, and S950.

At S910, a group identifier is assigned to each of the node groups.

At S920, a node identifier is assigned to each of the communication nodes within each of the node groups.

At S930, an intra-group reference node and a plurality of intra-group communication nodes in each of the node groups are determined.

In a feasible implementation, the intra-group reference node may be determined by random selection or sorting, which is not particularly limited herein. For example, when the intra-group reference node is determined by sorting, the top-ranked communication node or the bottom-ranked communication node may be selected as the intra-group reference node, which is not particularly limited herein.

At S940, correlation type information between the intra-group communication nodes and the intra-group reference node is determined.

In a feasible implementation, the correlation type information may include a channel correlation or other correlation type information, which is not particularly limited herein. For example, the correlation type information between the communication nodes close to each other in the node group may be determined to be the channel correlation.

At S950, the corresponding precoding configuration signaling is generated for each of the node groups according to the group identifier and the correlation type information.

In this embodiment, with the precoding configuration method including the above steps S910 to S950, first, a group identifier is assigned to each of the node groups; a node identifier is assigned to each of the communication nodes within each of the node groups; then, an intra-group reference node and a plurality of intra-group communication nodes in each of the node groups are determined; correlation type information between the intra-group communication nodes and the intra-group reference node is determined; and finally, the corresponding precoding configuration signaling is generated for each of the node groups according to the group identifier and the correlation type information. In this way, the precoding configuration signaling is sent to the corresponding node group according to the group identifier therein, such that each communication node in the node group can acquire the corresponding correlation type information and the corresponding precoding configuration information from the precoding configuration signaling for configuration. In other words, in the embodiment of the present disclosure, the precoding configuration information may be determined only for the intra-group reference node, and precoding configuration information of a plurality of intra-group communication nodes that have correlation type information with the intra-group reference node is determined by utilizing the correlation type information and the precoding configuration information of the intra-group reference node corresponding to the correlation type information. In this way, the time for determining the precoding configuration information is shortened, thereby improving the precoding configuration efficiency and satisfying the requirement for real-time beam modulation.

In an embodiment, before S950, S120 may further include, but not limited to, a following operation:
broadcasting the group identifier, the node identifier, the correlation type information, and node information of the intra-group reference node to each of the communication nodes through third signaling.

It can be understood that the node identifier may include the node identifier of the intra-group reference node and the node identifiers of the intra-group communication nodes, or may include only the node identifiers of the intra-group communication nodes, which is not particularly limited herein.

In this embodiment, first, a group identifier is assigned to each of the node groups; a node identifier is assigned to each of the communication nodes within each of the node groups; then, an intra-group reference node and a plurality of intra-group communication nodes in each of the node groups are determined; correlation type information between the intra-group communication nodes and the intra-group reference node is determined; then, the group identifier, the node identifier, the correlation type information, and node information of the intra-group reference node are broadcasted to each of the communication nodes through third signaling; and finally, the corresponding precoding configuration signaling is generated for each of the node groups according to the group identifier and the correlation type information. In this way, each communication node can determine corresponding precoding configuration signaling according to the group identifier learned in advance, then acquire corresponding correlation type information from the precoding configuration signaling according to the node identifier learned in advance, and determine, according to the node information of the intra-group reference node, whether it is the intra-group reference node. This is not particularly limited in the embodiments of the present disclosure.

In an embodiment, when the communication node determines according to the node information of the intra-group reference node that it is the intra-group reference node, the communication node may acquire the corresponding precoding configuration information in the corresponding precoding configuration signaling for configuration; and when the communication node determines according to the node information of the intra-group reference node that it is not the intra-group reference node, i.e., it is an intra-group communication node, the communication node may determine its own precoding configuration information according to the corresponding correlation type information and the precoding configuration information of the intra-group reference node corresponding to the correlation type information, and perform configuration by utilizing the precoding configuration information. Therefore, in the embodiment of the present disclosure, the time for determining the precoding configuration information is shortened, thereby satisfying the requirement for real-time beam modulation.

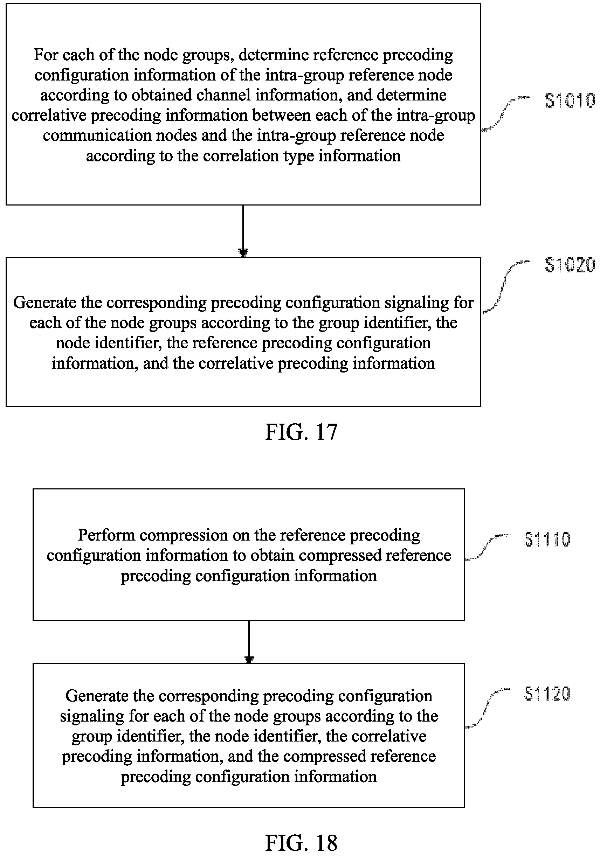

In an embodiment, as shown in FIG. 17, S950 is further described. S950 may include, but not limited to, the following steps S1010 and S1020.

At S1010, for each of the node groups, reference precoding configuration information of the intra-group reference node is determined according to obtained channel information, and correlative precoding information between each of the intra-group communication nodes and the intra-group reference node is determined according to the correlation type information.

At S1020, the corresponding precoding configuration signaling is generated for each of the node groups according to the group identifier, the node identifier, the reference precoding configuration information, and the correlative precoding information.

It can be understood that the node identifier may include the node identifier of the intra-group reference node and the node identifiers of the intra-group communication nodes, or may include only the node identifiers of the intra-group communication nodes, which is not particularly limited herein.

In an embodiment, each communication node in each node group may determine the corresponding precoding configuration signaling according to the group identifier, and then acquire the corresponding precoding configuration information from the precoding configuration signaling according to the node identifier. When the communication node is the intra-group reference node, the communication node may directly acquire the reference precoding configuration information for configuration. When the communication node is an intra-group communication node, the communication node may directly acquire the correlative precoding information for configuration. This is not particularly limited herein.

In this embodiment, with the precoding configuration method including the above steps S1010 to S1020, first, for each of the node groups, reference precoding configuration information of the intra-group reference node may be determined according to obtained channel information, and correlative precoding information between each of the intra-group communication nodes and the intra-group reference node may be determined according to the correlation type information; and then the corresponding precoding configuration signaling is generated for each of the node groups according to the group identifier, the node identifier, the reference precoding configuration information, and the correlative precoding information. In other words, in the embodiment of the present disclosure, only the reference precoding configuration information of the intra-group reference node needs to be determined according to the obtained channel information, and there is no need to determine the precoding configuration information of each communication node in the node group according to the obtained channel information. In this way, the amount of calculation performed based on the channel information to determine the precoding configuration information of the intra-group communication nodes is avoided, thereby shortening the time for determining the precoding configuration information, improving the precoding configuration efficiency, and satisfying the requirement for real-time beam modulation.

In an embodiment, when the node identifier does not include the node identifier of the intra-group reference node, a format of the precoding configuration signaling generated according to the group identifier, the node identifier, the reference precoding configuration information, and the correlative precoding information may be as shown in Table 8. GID represents a group identifier. PMR represents the reference precoding configuration information of the intra-group reference node. UID 1, UID 2, ..., UID N respectively represent node identifiers of different intra-group communication nodes. COR 1, COR 2, ..., COR N respectively represent correlative precoding information between the intra-group communication nodes and the intra-group reference node. The node identifier of each intra-group communication node corresponds one-to-one to the corresponding correlative precoding information. For example, the correlative precoding information corresponding to the intra-group communication node with the node identifier UID 1 is COR 1.

**Table 8**

| | | | | | | | | |
|---|---|---|---|---|---|---|---|---|
| GID | PMR | UID 1 | COR 1 | UID 2 | COR 2 | ... | UID N | COR N |

In an embodiment, as shown in FIG. 18, S1020 is further described. S1020 may include, but not limited to, the following steps S1110 and S1120.

At S1110, compression is performed on the reference precoding configuration information to obtain compressed reference precoding configuration information.

At S1120, the corresponding precoding configuration signaling is generated for each of the node groups according to the group identifier, the node identifier, the correlative precoding information, and the compressed reference precoding configuration information.

In this embodiment, with the precoding configuration method including the above steps S1110 to S1120, compression may be performed on the reference precoding configuration information to obtain compressed reference precoding configuration information; and then, the corresponding precoding configuration signaling is generated for each of the node groups according to the group identifier, the node identifier, the correlative precoding information, and the compressed reference precoding configuration information. Therefore, in the embodiment of the present disclosure, redundant information in the reference precoding configuration information can be removed by performing compression on the reference precoding configuration information, thereby reducing signaling overheads of the precoding configuration signaling.

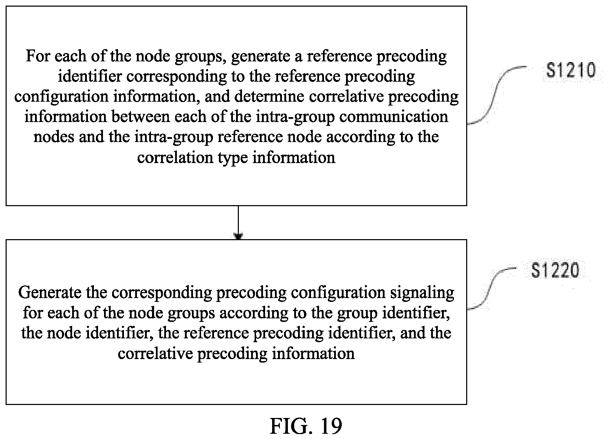

In an embodiment, as shown in FIG. 19, when the communication nodes each have a candidate precoding configuration information set pre-stored therein, and the candidate precoding configuration information set includes reference precoding configuration information of the intra-group reference node, S950 is further described. S950 may include, but not limited to, the following steps S1210 and S1220.

At S1210, for each of the node groups, a reference precoding identifier corresponding to the reference precoding configuration information is generated, and correlative precoding information between each of the intra-group communication nodes and the intra-group reference node is determined according to the correlation type information.

At S1220, the corresponding precoding configuration signaling is generated for each of the node groups according to the group identifier, the node identifier, the reference precoding identifier, and the correlative precoding information.

In this embodiment, with the precoding configuration method including the above steps S1210 to S1220, for each of the node groups, a reference precoding identifier corresponding to the reference precoding configuration information may be generated, and correlative precoding information between each of the intra-group communication nodes and the intra-group reference node may be determined according to the correlation type information; and then, the corresponding precoding configuration signaling is generated for each of the node groups according to the group identifier, the node identifier, the reference precoding identifier, and the correlative precoding information. In this way, the intra-group reference node can determine the reference precoding configuration information according to the reference precoding identifier, and the intra-group communication nodes can each determine the corresponding correlative precoding information according to the node identifier. Because time overheads caused by reconstructing the precoding configuration information are avoided, the efficiency of configuration of the communication nodes is improved, and the requirement for real-time beam modulation is satisfied.

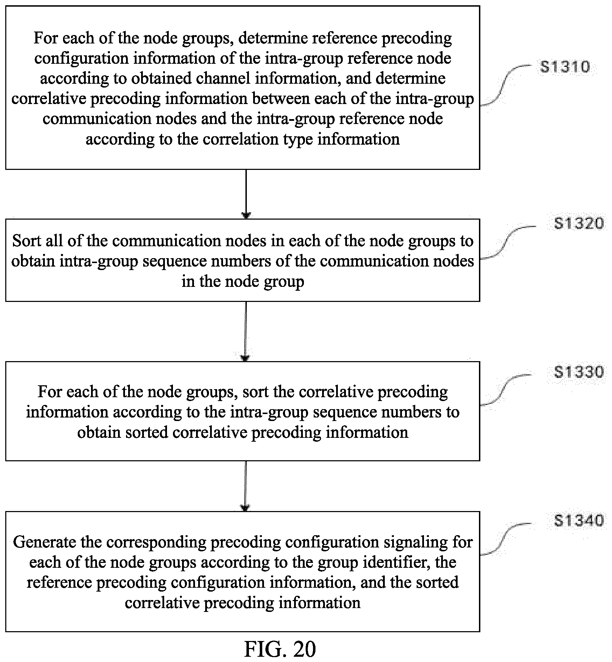

In an embodiment, as shown in FIG. 20, S950 is further described. S950 may include, but not limited to, the following steps S1310, S1320, S1330, and S1340.

At S1310, for each of the node groups, reference precoding configuration information of the intra-group reference node is determined according to obtained channel information, and correlative precoding information between each of the intra-group communication nodes and the intra-group reference node is determined according to the correlation type information.

At S1320, all of the communication nodes in each of the node groups are sorted to obtain intra-group sequence numbers of the communication nodes in the node group.

At S1330, for each of the node groups, the correlative precoding information is sorted according to the intra-group sequence numbers to obtain sorted correlative precoding information.

At S1340, the corresponding precoding configuration signaling is generated for each of the node groups according to the group identifier, the reference precoding configuration information, and the sorted correlative precoding information.

In this embodiment, with the precoding configuration method including the above steps S1310 to S1340, first, for each of the node groups, reference precoding configuration information of the intra-group reference node may be determined according to obtained channel information, and correlative precoding information between each of the intra-group communication nodes and the intra-group reference node may be determined according to the correlation type information; then, all of the communication nodes in each of the node groups are sorted to obtain intra-group sequence numbers of the communication nodes in the node group; for each of the node groups, the correlative precoding information may be sorted according to the intra-group sequence numbers to obtain sorted correlative precoding information; and finally, the corresponding precoding configuration signaling is generated for each of the node groups according to the group identifier, the reference precoding configuration information, and the sorted correlative precoding information. In this way, each intra-group communication node in each node group extracts the corresponding correlative precoding information from the sorted correlative precoding information according to its intra-group sequence number, and the intra-group reference node determines the reference precoding configuration information according to its intra-group sequence number. Because there is no need to use the node identifier to determine the corresponding correlative precoding information, signaling overheads caused by carrying the node identifier of each communication node are avoided, and signaling overheads are reduced.

In an embodiment, a format of the precoding configuration signaling generated according to the group identifier, the reference precoding configuration information, and the sorted correlative precoding information may be as shown in Table 9. GID represents a group identifier, PMR represents the reference precoding configuration information of the intra-group reference node, and COR 1, COR 2, ..., COR N represent the sorted correlative precoding information.

**Table 9**

| | | | | | |
|---|---|---|---|---|---|
| GID | PMR | COR 1 | COR 2 | ... | COR N |

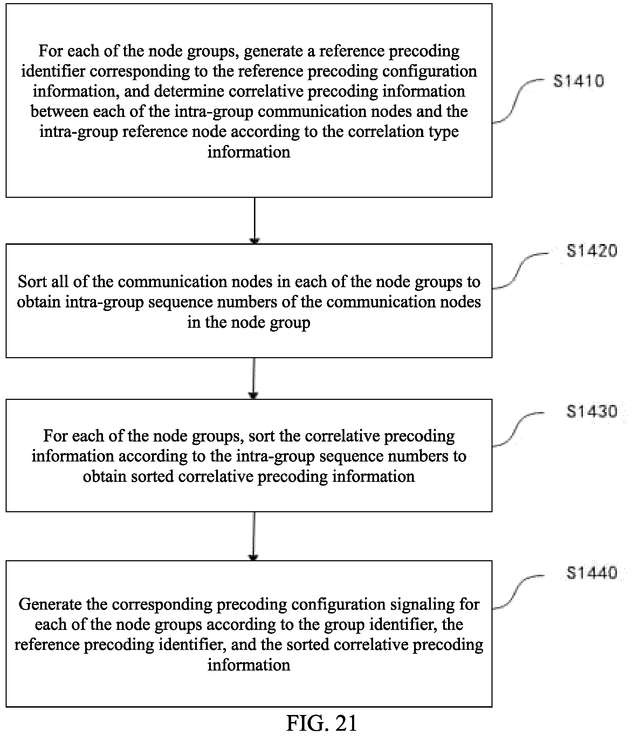

In another embodiment, as shown in FIG. 21, when the communication nodes each have a candidate precoding configuration information set pre-stored therein, and the candidate precoding configuration information set includes reference precoding configuration information of the intra-group reference node, S950 is further described. S950 may include, but not limited to, the following steps S1410, S1420, S1430, and S1440.

At S1410, for each of the node groups, a reference precoding identifier corresponding to the reference precoding configuration information is generated, and correlative precoding information between each of the intra-group communication nodes and the intra-group reference node is determined according to the correlation type information.

At S1420, all of the communication nodes in each of the node groups are sorted to obtain intra-group sequence numbers of the communication nodes in the node group.

At S1430, for each of the node groups, the correlative precoding information is sorted according to the intra-group sequence numbers to obtain sorted correlative precoding information.

At S1440, the corresponding precoding configuration signaling is generated for each of the node groups according to the group identifier, the reference precoding identifier, and the sorted correlative precoding information.

In this embodiment, with the precoding configuration method including the above steps S1410 to S1440, for each of the node groups, a reference precoding identifier corresponding to the reference precoding configuration information may be generated, and correlative precoding information between each of the intra-group communication nodes and the intra-group reference node may be determined according to the correlation type information; then, all of the communication nodes in each of the node groups are sorted to obtain intra-group sequence numbers of the communication nodes in the node group; for each of the node groups, the correlative precoding information may be sorted according to the intra-group sequence numbers to obtain sorted correlative precoding information; and finally, the corresponding precoding configuration signaling is generated for each of the node groups according to the group identifier, the reference precoding identifier, and the sorted correlative precoding information. In this way, each intra-group communication node in each node group extracts the corresponding correlative precoding information from the sorted correlative precoding information according to its intra-group sequence number, and performs configuration by utilizing the corresponding correlative precoding information. Because there is no need to use the node identifier to determine the corresponding correlative precoding information, signaling overheads caused by carrying the node identifier of each communication node are avoided, and signaling overheads are reduced. In addition, the intra-group reference node can determine the reference precoding configuration information according to the reference precoding identifier, and perform configuration by utilizing the reference precoding configuration information.

In an embodiment, a format of the precoding configuration signaling generated according to the group identifier, the reference precoding identifier, and the sorted correlative precoding information may be as shown in Table 10. GID represents a group identifier, PMI-R represents a reference precoding identifier, and COR 1, COR 2, ..., COR N represent the sorted correlative precoding information.

**Table 10**

| | | | | | |
|---|---|---|---|---|---|
| GID | PMI-R | COR 1 | COR 2 | ... | COR N |

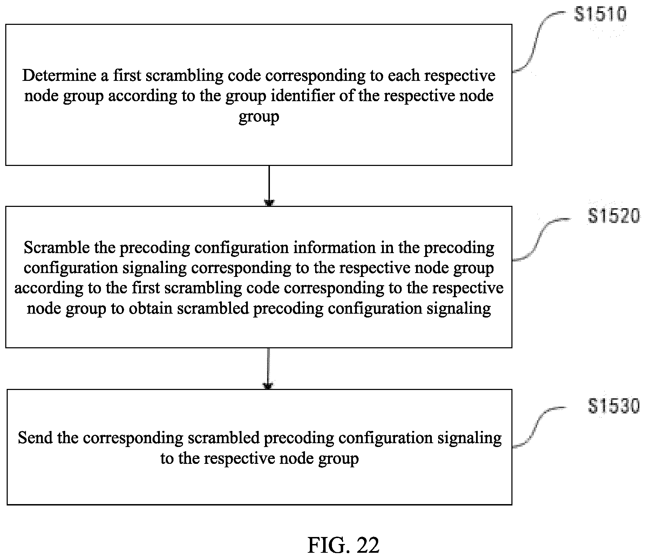

In an embodiment, as shown in FIG. 22, S130 is further described. S130 may include, but not limited to, the following steps S1510, S1520, and S1530.

At S1510, a first scrambling code corresponding to each respective node group is determined according to the group identifier of the respective node group.

It can be understood that the first scrambling code is a pseudo-random code sequence, which is not particularly limited herein.

At S1520, the precoding configuration information in the precoding configuration signaling corresponding to the respective node group is scrambled according to the first scrambling code corresponding to the respective node group to obtain scrambled precoding configuration signaling.

At S1530, the corresponding scrambled precoding configuration signaling is sent to the respective node group.

It can be understood that only the communication node in the node group corresponding to the scrambled precoding configuration signaling can descramble the scrambled precoding configuration signaling to obtain the precoding configuration information from the precoding configuration signaling.

In this embodiment, with the precoding configuration method including the above steps S1510 to S1530, a first scrambling code corresponding to each respective node group may be determined according to the group identifier of the respective node group; then, the precoding configuration information in the precoding configuration signaling corresponding to the respective node group is scrambled according to the first scrambling code corresponding to the respective node group to obtain scrambled precoding configuration signaling; and finally, the corresponding scrambled precoding configuration signaling is sent to the respective node group. In this way, each communication node in each node group can descramble only the corresponding scrambled precoding configuration signaling to obtain the corresponding precoding configuration information from the precoding configuration signaling. Therefore, in the embodiment of the present disclosure, different node groups can be distinguished by utilizing the scrambled precoding configuration signaling.

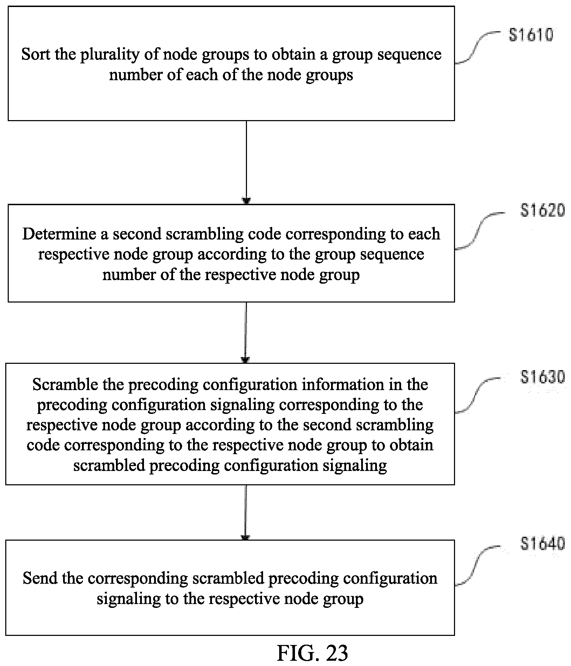

In another embodiment, as shown in FIG. 23, S130 is further described. S130 may include, but not limited to, the following steps S1610, S1620, S1630, and S1640.

At S1610, the plurality of node groups is sorted to obtain a group sequence number of each of the node groups.

At S1620, a second scrambling code corresponding to each respective node group is determined according to the group sequence number of the respective node group.

It can be understood that the second scrambling code is a pseudo-random code sequence, which is not particularly limited herein.

At S1630, the precoding configuration information in the precoding configuration signaling corresponding to the respective node group is scrambled according to the second scrambling code corresponding to the respective node group to obtain scrambled precoding configuration signaling.

At S1640, the corresponding scrambled precoding configuration signaling is sent to the respective node group.

It can be understood that only the communication node in the node group corresponding to the scrambled precoding configuration signaling can descramble the scrambled precoding configuration signaling to obtain the precoding configuration information in the precoding configuration signaling.

In this embodiment, with the precoding configuration method including the above steps S1610 to S1640, the plurality of node groups may be sorted to obtain a group sequence number of each of the node groups; then, a second scrambling code corresponding to each respective node group is determined according to the group sequence number of the respective node group; the precoding configuration information in the precoding configuration signaling corresponding to the respective node group is scrambled according to the second scrambling code corresponding to the respective node group to obtain scrambled precoding configuration signaling; and finally, the corresponding scrambled precoding configuration signaling is sent to the respective node group. In this way, each communication node in each node group can descramble only the corresponding scrambled precoding configuration signaling to obtain the corresponding precoding configuration information from the precoding configuration signaling. Therefore, in the embodiment of the present disclosure, different node groups can be distinguished by utilizing the scrambled precoding configuration signaling.

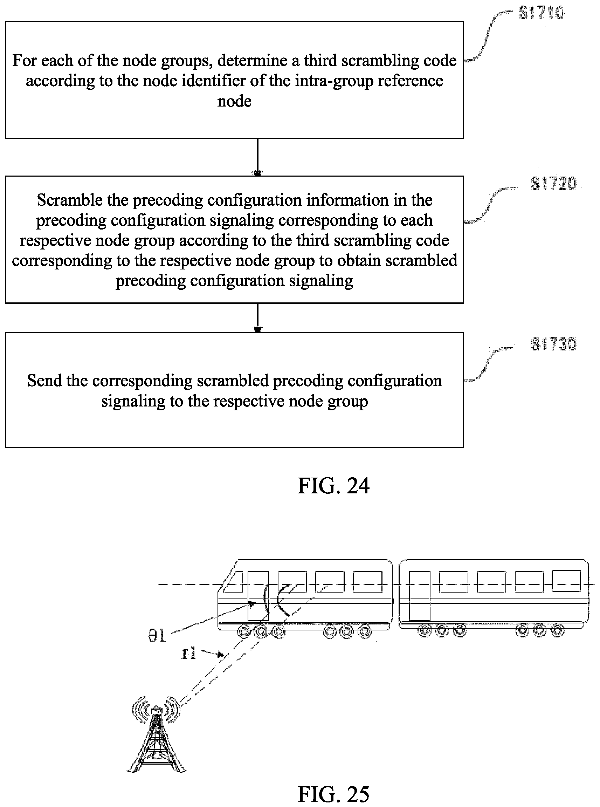

In another embodiment, as shown in FIG. 24, S130 is further described. S130 may include, but not limited to, the following steps S1710, S1720, and S1730.

At S1710, for each of the node groups, a third scrambling code is determined according to the node identifier of the intra-group reference node.

It can be understood that the third scrambling code is a pseudo-random code sequence, which is not particularly limited herein.

At S1720, the precoding configuration information in the precoding configuration signaling corresponding to each respective node group is scrambled according to the third scrambling code corresponding to the respective node group to obtain scrambled precoding configuration signaling.

At S1730, the corresponding scrambled precoding configuration signaling is sent to the respective node group.

In this embodiment, with the precoding configuration method including the above steps S1710 to S1730, for each of the node groups, a third scrambling code may be determined according to the node identifier of the intra-group reference node; then, the precoding configuration information in the precoding configuration signaling corresponding to each respective node group is scrambled according to the third scrambling code corresponding to the respective node group to obtain scrambled precoding configuration signaling; and finally, the corresponding scrambled precoding configuration signaling is sent to the respective node group. In this way, each communication node in each node group can descramble only the corresponding scrambled precoding configuration signaling to obtain the corresponding precoding configuration information from the precoding configuration signaling. Therefore, in the embodiment of the present disclosure, different node groups can be distinguished by utilizing the scrambled precoding configuration signaling.

The precoding configuration methods provided in the above embodiments will be described in detail below by way of specific examples.

In an embodiment, assigning group identifiers and node identifiers to communication nodes for which precoding configuration is to be performed may include the following steps.

At step 1, statistics on communication nodes for which precoding configuration is to be performed are collected.

At step 2, the communication nodes are grouped according to a specified grouping criterion.

At step 3, a group identifier is assigned to each node group, and a node identifier is assigned to each communication node in each node group.

At step 4, the group identifier and the node identifier is delivered to the respective each communication node for which the precoding configuration is to be performed through specified downlink channel.

At step 5, the respective each communication node for which the precoding configuration is to be performed receives precoding configuration signaling through specified channel.

At step 6, each communication node acquires the group identifier and the corresponding node identifier from the received precoding configuration signaling, and stores same in an internal memory thereof.

In an embodiment, assigning group identifiers to communication nodes for which precoding configuration is to be performed and sorting the communication nodes in each node group may include the following steps.

At step 1, statistics on communication nodes for which precoding configuration is to be performed are collected.

At step 2, the communication nodes are grouped according to a specified grouping criterion.

At step 3, a group identifier is assigned to each node group, and all communication nodes in each node group are sorted to obtain intra-group sequence numbers of the communication nodes in the node group.

At step 4, the group identifier and the intra-group sequence number of the communication node is delivered to the respective each communication node for which the precoding configuration is to be performed through the specified downlink channel.

At step 5, the respective each communication node for which the precoding configuration is to be performed receives precoding configuration signaling through the specified channel.

At step 6, each communication node acquires the group identifier and the corresponding intra-group sequence number from the received precoding configuration signaling, and stores same in an internal memory thereof.

In an embodiment, determining an intra-group reference node in each node group and broadcasting node information of the intra-group reference node to corresponding communication nodes may include the following steps.

At step 1, statistics on communication nodes for which precoding configuration is to be performed are collected.

At step 2, the communication nodes are grouped according to a specified grouping criterion.

At step 3, an intra-group reference node in each node group is determined.

At step 4, node information of the intra-group reference node is delivered through a specified downlink channel to the communication nodes for which precoding configuration is to be performed.

At step 5, the communication nodes respectively receive precoding configuration signaling through specified channels.

At step 6, each communication node acquires the node information of the intra-group reference node from the received precoding configuration signaling, and stores same in an internal memory thereof.

In step 3, all of the communication nodes in each node group may be sorted to obtain intra-group sequence numbers of the communication nodes in the node group; and correspondingly, in step 6, the intra-group sequence numbers of the communication nodes may be stored in the internal memory.

It should be noted that the group identifier and the intra-group sequence number of the communication nodes may be changed in all the above embodiments. For example, for a communication node which is mobile, when the location of the communication node changes, the original grouping criterion no longer applies, and the communication node needs to be re-grouped. Therefore, for the communication node grouping step in all the embodiments, the communication node may be re-grouped according to a preset time interval; or the communication node may be re-grouped according to a preset trigger condition. For example, after a communication node reports a location change, the communication node needs to be re-grouped. In addition, each time communication nodes are grouped, group identifiers (or group identifiers and intra-group sequence numbers) are re-assigned to the node groups, and the communication nodes need to be re-grouped according to the precoding configuration signaling.

In an embodiment, assigning group identifiers to communication nodes for which precoding configuration is to be performed and sorting the communication nodes in each node group may include the following steps.

At step 1, precoding configuration information corresponding to each communication node is determined, or corresponding precoding configuration information is generated according to common information applicable to configuration of each communication node and personalized information applicable to configuration of the communication node, and configuration is performed by utilizing the precoding configuration information.

At step 2, a scrambling code (e.g., a first scrambling code, a second scrambling code, or a third scrambling code) corresponding to each node group is determined, and the precoding configuration information is scrambled by utilizing the scrambling code to generate scrambled precoding configuration signaling.

At step 3, the scrambled precoding configuration signaling is delivered through a specified multicast channel.

At step 4, the communication node receives the scrambled precoding configuration signaling from the multicast channel.

At step 5, the scrambled precoding configuration signaling is descrambled to obtain descrambled precoding configuration signaling; and precoding configuration information is acquired from the descrambled precoding configuration signaling; or first configuration information and second configuration information are acquired from the descrambled precoding configuration signaling, and precoding reconstruction is performed according to the first configuration information and the second configuration information to obtain precoding configuration information.

At step 6, beam modulation configuration is implemented by utilizing the obtained precoding configuration information.

In an embodiment, as shown in FIG. 2, it is assumed that mobile terminals located on the same floor are grouped into one node group, all the mobile terminals in the node group are at the same height relative to the ground, and each of the mobile terminals has a different inclination angle relative to the communication base station. In this case, precoding configuration information corresponding to respective mobile terminals may be determined by measuring a vertical orientation of only one mobile terminal and measuring horizontal orientations of all the mobile terminals, which is not particularly limited herein.

In an embodiment, as shown in FIG. 3, location distances between three mobile terminals are less than the distance threshold, so the three mobile terminals may be grouped into a first node group 120, and corresponding precoding configuration information may be determined for the first node group; and a location distance between another two communication nodes is less than the distance threshold, so the two communication nodes may be grouped into a second node group 110, and corresponding precoding configuration information may be determined for the second node group.

In an embodiment, as shown in FIG. 4, the length distances between the mobile terminals in the same node group and the communication base station fall within the same distance range, but the angular distances of the mobile terminals corresponding to the same distance range relative to the location of the communication base station are inconsistent. Therefore, precoding configuration information corresponding to respective mobile terminals may be determined by measuring the length distance between only one of the mobile terminals and the communication base station and measuring the angular distances of all the mobile terminals relative to the base station location of the communication base station, which is not particularly limited herein.

In an embodiment, as shown in FIG. 6, it is assumed that the transmitter is a communication base station, and the communication nodes are a first reflective RIS deployed outside a first building and a second reflective RIS deployed outside a second building. Because the first reflective RIS and the second reflective RIS have the same coverage area and generally a direct path has strongest energy, a reflection channel of the first reflective RIS and a reflection channel of the second reflective RIS can be directly estimated according to the location of the first reflective RIS, the location of the second reflective RIS, the coverage area of the first reflective RIS, and the coverage area of the second reflective RIS; and then an incident channel of the first reflective RIS and an incident channel of the second reflective RIS are estimated according to the location of the base station, the location of the first reflective RIS, and the location of the second reflective RIS. In this way, corresponding precoding configuration information can be directly estimated. Alternatively, a more accurate estimation can be achieved using a small number of active measurement units on the first reflective RIS and the second reflective RIS. This is not particularly limited herein.

In an embodiment, as shown in FIG. 8, the transmitter is a communication base station, and the communication nodes are transmissive RISs integrated on windows of a high-speed railway. Because precoding configuration information corresponding to the RISs is updated frequently due to the fast movement of the high-speed railway, an efficient precoding determination method is needed.

In an embodiment, as shown in FIG. 25, because positions of windows of the high-speed railway are fixed relative to one another, a position of a second window relative to the base station can be calculated using a simple geometric formula after an azimuth angle θ1 of a first window and a distance r1 between the first window and the communication base station are measured. Then, precoding configuration information corresponding to the transmissive RIS on the first window and precoding configuration information corresponding to the transmissive RIS on the second window are determined. It can be understood that due to the railway speed, track conditions, ambient occlusion, and other reasons, an excessively long distance between the window and the communication base station will lead to a large estimation error. Therefore, the nodes need to be properly grouped according to an actual situation while taking into account both efficiency and accuracy.

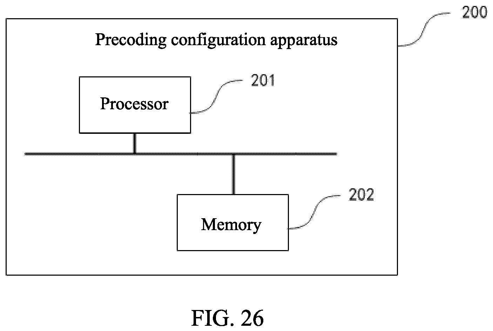

In addition, referring to FIG. 26, an embodiment of the present disclosure provides a precoding configuration apparatus. The precoding configuration apparatus 200 includes a memory 202, a processor 201, and a computer program stored in the memory 202 and executable by the processor 201.

The processor 201 and the memory 202 may be connected by a bus or in other ways.

The memory 202, as a non-transitory computer-readable storage medium, may be configured for storing a non-transitory software program and a non-transitory computer-executable program. In addition, the memory 202 may include a high-speed random access memory, and may also include a non-transitory memory, e.g., at least one magnetic disk storage device, flash memory device, or other non-transitory solid-state storage device. In some implementations, the memory 202 optionally includes memories located remotely from the processor 201, and the remote memories may be connected to the processor 201 via a network. Examples of the network include, but not limited to, the Internet, an intranet, a local area network, a mobile communication network, and combinations thereof.

The non-transitory software program and instruction required to carry out the precoding configuration method of the foregoing embodiments are stored in the memory 202 which, when executed by the processor 201, cause the processor 201 to carry out the precoding configuration method of the foregoing embodiments, for example, carry out the method steps S110 to S130 in FIG. 1, the method steps S210 to S230 in FIG. 9, the method steps S310 to S330 in FIG. 10, the method steps S410 to S420 in FIG. 11, the method steps S510 to S520 in FIG. 12, the method steps S610 to S630 in FIG. 13, the method steps S710 to S740 in FIG. 14, the method steps S810 to S830 in FIG. 15, the method steps S910 to S950 in FIG. 16, the method steps S1010 to S1020 in FIG. 17, the method steps S1110 to S1120 in FIG. 18, the method steps S1210 to S1220 in FIG. 19, the method steps S1310 to S1340 in FIG. 20, the method steps S1410 to S1440 in FIG. 21, the method steps S1510 to S1530 in FIG. 22, the method steps S1610 to S1640 in FIG. 23, or the method steps S1710 to S1730 in FIG. 24.

The device embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing computer-executable instructions which, when executed by a processor or controller, cause the processor or controller to implement, for example, the method steps S110 to S130 in FIG. 1, the method steps S210 to S230 in FIG. 9, the method steps S310 to S330 in FIG. 10, the method steps S410 to S420 in FIG. 11, the method steps S510 to S520 in FIG. 12, the method steps S610 to S630 in FIG. 13, the method steps S710 to S740 in FIG. 14, the method steps S810 to S830 in FIG. 15, the method steps S910 to S950 in FIG. 16, the method steps S1010 to S1020 in FIG. 17, the method steps S1110 to S1120 in FIG. 18, the method steps S1210 to S1220 in FIG. 19, the method steps S1310 to S1340 in FIG. 20, the method steps S1410 to S1440 in FIG. 21, the method steps S1510 to S1530 in FIG. 22, the method steps S1610 to S1640 in FIG. 23, or the method steps S1710 to S1730 in FIG. 24.

In addition, an embodiment of the present disclosure provides a computer program product, including a computer program or a computer instruction stored in a computer-readable storage medium which, when read from the computer-readable storage medium by a processor of a computer device, causes the computer device to carry out the precoding configuration method in the above embodiments, for example, carry out the method steps S110 to S130 in FIG. 1, the method steps S210 to S230 in FIG. 9, the method steps S310 to S330 in FIG. 10, the method steps S410 to S420 in FIG. 11, the method steps S510 to S520 in FIG. 12, the method steps S610 to S630 in FIG. 13, the method steps S710 to S740 in FIG. 14, the method steps S810 to S830 in FIG. 15, the method steps S910 to S950 in FIG. 16, the method steps S1010 to S1020 in FIG. 17, the method steps S1110 to S1120 in FIG. 18, the method steps S1210 to S1220 in FIG. 19, the method steps S1310 to S1340 in FIG. 20, the method steps S1410 to S1440 in FIG. 21, the method steps S1510 to S1530 in FIG. 22, the method steps S1610 to S1640 in FIG. 23, or the method steps S1710 to S1730 in FIG. 24.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A precoding configuration method, comprising:
grouping a plurality of communication nodes for which precoding configuration is to be performed, to obtain a plurality of node groups;
generating corresponding precoding configuration signaling for each of the node groups, wherein the precoding configuration signaling corresponding to each respective node group comprises precoding configuration information corresponding to each communication node in the respective node group; and
sending the corresponding precoding configuration signaling to the respective node group, such that each communication node in the respective node group acquires the corresponding precoding configuration information in the corresponding precoding configuration signaling for configuration.

2. The precoding configuration method of claim 1, wherein grouping a plurality of communication nodes for which precoding configuration is to be performed comprises at least one of:
grouping the plurality of communication nodes for which the precoding configuration is to be performed according to a channel correlation;
grouping the plurality of communication nodes for which the precoding configuration is to be performed according to location information;
grouping the plurality of communication nodes for which the precoding configuration is to be performed according to users served by or coverage areas; or
grouping the plurality of communication nodes for which the precoding configuration is to be performed according to communication node types.

3. The precoding configuration method of claim 2, wherein in response to the plurality of communication nodes being grouped according to the location information, the location information comprises at least one of:
location distances between the plurality of communication nodes for which the precoding configuration is to be performed; or
location distances of the plurality of communication nodes for which the precoding configuration is to be performed relative to a reference location, wherein the location distance comprises a length distance and/or an angular distance.

4. The precoding configuration method of claim 1, wherein grouping a plurality of communication nodes for which precoding configuration is to be performed comprises:
grouping the plurality of communication nodes for which the precoding configuration is to be performed in response to detecting a change in any one of locations of the communication nodes, a number of communication nodes, or a wireless channel environment, or receiving a regrouping instruction.

5. The precoding configuration method of claim 1, wherein generating corresponding precoding configuration signaling for each of the node groups comprises:
assigning a group identifier to each of the node groups;
assigning a node identifier to each of the communication nodes within each of the node groups; and
generating corresponding precoding configuration signaling for each of the node groups according to the group identifier and the node identifier.

6. The precoding configuration method of claim 5, wherein before generating corresponding precoding configuration signaling for each of the node groups according to the group identifier and the node identifier, generating corresponding precoding configuration signaling for each of the node groups further comprises:
broadcasting the group identifier and the node identifier to the corresponding communication node through first signaling.

7. The precoding configuration method of claim 5, wherein generating corresponding precoding configuration signaling for each of the node groups according to the group identifier and the node identifier comprises:
determining a precoding configuration information set for each of the node groups according to obtained channel information;
extracting first configuration information and second configuration information in the precoding configuration information set of each node group, wherein the first configuration information comprises common information suitable for configuration of all the communication nodes in the node group, and the second configuration information comprises personalized information suitable for configuration of each of the communication nodes in the node group; and
generating the corresponding precoding configuration signaling for each of the node groups according to the group identifier, the node identifier, the first configuration information, and the second configuration information.

8. The precoding configuration method of claim 7, wherein generating the corresponding precoding configuration signaling for each of the node groups according to the group identifier, the node identifier, the first configuration information, and the second configuration information comprises:
performing compression on the first configuration information and the second configuration information to obtain compressed first configuration information and compressed second configuration information; and
generating the corresponding precoding configuration signaling for each of the node groups according to the group identifier, the node identifier, the compressed first configuration information, and the compressed second configuration information.

9. The precoding configuration method of claim 5, wherein the communication nodes each have target precoding configuration information pre-stored therein, and the target precoding configuration information comprises first configuration information and second configuration information; and
generating corresponding precoding configuration signaling for each of the node groups according to the group identifier and the node identifier comprises:
generating a common identifier corresponding to the first configuration information and a personalized identifier corresponding to the second configuration information; and
generating the corresponding precoding configuration signaling for each of the node groups according to the group identifier, the node identifier, the common identifier, and the personalized identifier.

10. The precoding configuration method of claim 1, wherein generating corresponding precoding configuration signaling for each of the node groups comprises:
assigning a group identifier to each of the node groups;
sorting all of the communication nodes in each of the node groups to obtain intra-group sequence numbers of the communication nodes in the node group; and
generating corresponding precoding configuration signaling for each of the node groups according to the group identifier and the intra-group sequence numbers.

11. The precoding configuration method of claim 10, wherein sorting all of the communication nodes in each of the node groups comprises one of:
randomly sorting all of the communication nodes in each of the node groups;
sorting all of the communication nodes in each of the node groups according to a preset reference node and a preset reference indicator; or
sorting all of the communication nodes in each of the node groups according to a correlation between the communication nodes in the node group.

12. The precoding configuration method of claim 10, wherein before generating corresponding precoding configuration signaling for each of the node groups according to the group identifier and the intra-group sequence numbers, generating corresponding precoding configuration signaling for each of the node groups further comprises:
broadcasting the group identifier and the intra-group sequence number to the corresponding communication node through second signaling.

13. The precoding configuration method of claim 10, wherein generating corresponding precoding configuration signaling for each of the node groups according to the group identifier and the intra-group sequence numbers comprises:
determining a precoding configuration information set for each of the node groups according to obtained channel information;
extracting first configuration information and second configuration information in the precoding configuration information set of each node group;
sorting the second configuration information according to the intra-group sequence numbers to obtain sorted second configuration information; and
generating the corresponding precoding configuration signaling for each of the node groups according to the group identifier, the first configuration information, and the sorted second configuration information.

14. The precoding configuration method of claim 13, wherein before sorting the second configuration information according to the intra-group sequence numbers to obtain sorted second configuration information, generating corresponding precoding configuration signaling for each of the node groups according to the group identifier and the intra-group sequence numbers further comprises:
performing compression on the first configuration information and the second configuration information to obtain compressed first configuration information and compressed second configuration information.

15. The precoding configuration method of claim 10, wherein the communication nodes each have target precoding configuration information pre-stored therein, and the target precoding configuration information comprises first configuration information and second configuration information; and
generating corresponding precoding configuration signaling for each of the node groups according to the group identifier and the intra-group sequence numbers comprises:
generating a common identifier corresponding to the first configuration information and personalized identifiers corresponding to the second configuration information; and
sorting the personalized identifiers according to the intra-group sequence number to obtain sorted personalized identifiers; and
generating the corresponding precoding configuration signaling for each of the node groups according to the group identifier, the common identifier, and the sorted personalized identifiers.

16. The precoding configuration method of claim 1, wherein generating corresponding precoding configuration signaling for each of the node groups comprises:
assigning a group identifier to each of the node groups;
assigning a node identifier to each of the communication nodes within each of the node groups;
determining an intra-group reference node and a plurality of intra-group communication nodes in each of the node groups;
determining correlation type information between the intra-group communication nodes and the intra-group reference node; and
generating the corresponding precoding configuration signaling for each of the node groups according to the group identifier and the correlation type information.

17. The precoding configuration method of claim 16, wherein the intra-group reference node is determined by random selection or sorting.

18. The precoding configuration method of claim 16, wherein before generating the corresponding precoding configuration signaling for each of the node groups according to the group identifier and the correlation type information, generating corresponding precoding configuration signaling for each of the node groups further comprises:
broadcasting the group identifier, the node identifier, the correlation type information, and node information of the intra-group reference node to each of the communication nodes through third signaling.

19. The precoding configuration method of claim 16, wherein generating the corresponding precoding configuration signaling for each of the node groups according to the group identifier and the correlation type information comprises:
for each of the node groups, determining reference precoding configuration information of the intra-group reference node according to obtained channel information, and determining correlative precoding information between each of the intra-group communication nodes and the intra-group reference node according to the correlation type information; and
generating the corresponding precoding configuration signaling for each of the node groups according to the group identifier, the node identifier, the reference precoding configuration information, and the correlative precoding information.

20. The precoding configuration method of claim 19, wherein generating the corresponding precoding configuration signaling for each of the node groups according to the group identifier, the node identifier, the reference precoding configuration information, and the correlative precoding information comprises:
performing compression on the reference precoding configuration information to obtain compressed reference precoding configuration information; and
generating the corresponding precoding configuration signaling for each of the node groups according to the group identifier, the node identifier, the correlative precoding information, and the compressed reference precoding configuration information.

21. The precoding configuration method of claim 16, wherein the communication nodes each have a candidate precoding configuration information set pre-stored therein, and the candidate precoding configuration information set comprises reference precoding configuration information of the intra-group reference node; and
generating the corresponding precoding configuration signaling for each of the node groups according to the group identifier and the correlation type information comprises:
for each of the node groups, generating a reference precoding identifier corresponding to the reference precoding configuration information, and determining correlative precoding information between each of the intra-group communication nodes and the intra-group reference node according to the correlation type information; and
generating the corresponding precoding configuration signaling for each of the node groups according to the group identifier, the node identifier, the reference precoding identifier, and the correlative precoding information.

22. The precoding configuration method of claim 16, wherein generating the corresponding precoding configuration signaling for each of the node groups according to the group identifier and the correlation type information comprises:
for each of the node groups, determining reference precoding configuration information of the intra-group reference node according to obtained channel information, and determining correlative precoding information between each of the intra-group communication nodes and the intra-group reference node according to the correlation type information;
sorting all of the communication nodes in each of the node groups to obtain intra-group sequence numbers of the communication nodes in the node group;
for each of the node groups, sorting the correlative precoding information according to the intra-group sequence numbers to obtain sorted correlative precoding information; and
generating the corresponding precoding configuration signaling for each of the node groups according to the group identifier, the reference precoding configuration information, and the sorted correlative precoding information.

23. The precoding configuration method of claim 16, wherein the communication nodes each have a candidate precoding configuration information set pre-stored therein, and the candidate precoding configuration information set comprises reference precoding configuration information of the intra-group reference node; and
generating the corresponding precoding configuration signaling for each of the node groups according to the group identifier and the correlation type information comprises:
for each of the node groups, generating a reference precoding identifier corresponding to the reference precoding configuration information, and determining correlative precoding information between each of the intra-group communication nodes and the intra-group reference node according to the correlation type information;
sorting all of the communication nodes in each of the node groups to obtain intra-group sequence numbers of the communication nodes in the node group;
for each of the node groups, sorting the correlative precoding information according to the intra-group sequence numbers to obtain sorted correlative precoding information; and
generating the corresponding precoding configuration signaling for each of the node groups according to the group identifier, the reference precoding identifier, and the sorted correlative precoding information.

24. The precoding configuration method of claim 1, wherein the precoding configuration information comprises at least one of:
precoding configuration information for emitting a wireless signal;
precoding configuration information for receiving a wireless signal;
precoding configuration information for relaying a wireless signal;
precoding configuration information for reflecting a wireless signal; or
precoding configuration information for transmitting a wireless signal.

25. The precoding configuration method of claim 5, 10, or 16, wherein sending the corresponding precoding configuration signaling to the respective node group comprises:
determining a first scrambling code corresponding to the respective node group according to the group identifier of the respective node group;
scrambling the precoding configuration information in the precoding configuration signaling corresponding to the respective node group according to the first scrambling code corresponding to the respective node group to obtain scrambled precoding configuration signaling; and
sending the corresponding scrambled precoding configuration signaling to the respective node group.

26. The precoding configuration method of claim 1, wherein sending the corresponding precoding configuration signaling to the respective node group comprises:
sorting the plurality of node groups to obtain a group sequence number of each of the node groups;
determining a second scrambling code corresponding to each of the node groups according to the group sequence number of the node group;
scrambling the precoding configuration information in the precoding configuration signaling corresponding to each respective node group according to the second scrambling code corresponding to the respective node group to obtain scrambled precoding configuration signaling; and
sending the corresponding scrambled precoding configuration signaling to each of the node groups.

27. The precoding configuration method of claim 16, wherein sending the corresponding precoding configuration signaling to the respective node group comprises:
for each of the node groups, determining a third scrambling code according to the node identifier of the intra-group reference node;
scrambling the precoding configuration information in the precoding configuration signaling corresponding to each respective node group according to the third scrambling code corresponding to the respective node group to obtain scrambled precoding configuration signaling; and
sending the corresponding scrambled precoding configuration signaling to each of the node groups.

28. The precoding configuration method of claim 1, wherein sending the corresponding precoding configuration signaling to the respective node group comprises:
sending the corresponding precoding configuration signaling to the respective node group in a multicast manner.

29. A precoding configuration apparatus, comprising: a memory, a processor, and a computer program stored in the memory and executable by the processor, wherein the computer program, when executed by the processor, causes the processor to carry out the precoding configuration method of any of claims 1 to 28.

30. A computer-readable storage medium, storing computer-executable instructions which, when executed by a processor, cause the processor to carry out the precoding configuration method of any of claims 1 to 28.
